(19) Europäisches Patentamt
European Patent Office
Office européen des brevets

(11) Veröffentlichungsnummer **0 029 972**
**B1**

(12) # EUROPÄISCHE PATENTSCHRIFT

(45) Veröffentlichungstag der Patentschrift: **19.09.84**

(51) Int. Cl.³: **D 06 L 3/12,** C 08 G 63/68

(21) Anmeldenummer: **80107261.2**

(22) Anmeldetag: **21.11.80**

(54) **Präparation zum Aufhellen von Synthesefasern, Verfahren zu ihrer Herstellung und Verfahren zum optischen Aufhellen.**

(30) Priorität: **30.11.79 DE 2948183**

(43) Veröffentlichungstag der Anmeldung: **10.06.81 Patentblatt 81/23**

(45) Bekanntmachung des Hinweises auf die Patenterteilung: **19.09.84 Patentblatt 84/38**

(84) Benannte Vertragsstaaten: **CH DE FR GB IT LI**

(56) Entgegenhaltungen:
**EP - A - 0 013 564**
**CH - A - 380 953**
**FR - A - 1 377 064**

(73) Patentinhaber: **CASSELLA Aktiengesellschaft, Hanauer Landstrasse 526, D-6000 Frankfurt am Main 61 (DE)**

(72) Erfinder: **Engelhardt, Friedrich, Dr., Hünfelder Strasse 20, D-6000 Frankfurt am Main 61 (DE)**
Erfinder: **Hintermeier, Karl, Dr., Hünfelder Strasse 18, D-6000 Frankfurt am Main 61 (DE)**
Erfinder: **Friedrich, Herbert, Dr., Königsberger Strasse 17, D-6056 Heusenstamm (DE)**
Erfinder: **Martini, Thomas, Dr., Am Schellberg 42, D-6232 Bad Soden/Taunus (DE)**

(74) Vertreter: **Urbach, Hans-Georg, Dr. et al, Hanauer Landstrasse 526, D-6000 Frankfurt am Main 61 (DE)**

**EP 0 029 972 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Wasserunlösliche optische Aufheller, die zum Aufhellen von Synthesefasern oder Gemischen von Synthesefasern mit natürlichen Fasern dienen, werden im allgemeinen als wäßrige Dispersionen in den Handel gebracht und enthalten einen oder mehrere optische Aufheller in fein verteilter Form, ein oder mehrere nichtionische Dispergiermittel und gegebenenfalls weitere Zusätze, wie z. B. Antischaummittel, Fungizide, Netzmittel etc. Die Dispersionen werden normalerweise durch Naßmahlprozesse hergestellt. Dazu werden ein oder mehrere optische Aufheller in wäßriger Suspension zusammen mit einem Dispergier- oder Mahlhilfsmittel mittels Sand oder Glasperlen in einer Rührwerkskugelmühle solange vermahlen, bis die gewünschte Feinverteilung erreicht ist. Danach werden die restlichen Zusätze eingerührt und die Dispersion vom Mahlkörper abgesiebt. Als nichtionische Dispergiermittel ist eine große Zahl von Produkten bekannt geworden (vgl. z. B. DE-AS 20 16 470, 27 34 204, DE-OS 24 43 481, AT-PS 1 96 343 und CH-PS 4 27 722), die jedoch zum Teil hohe Einsatzmengen erfordern, z. T. aber auch Dispersionen mit ungenügender Lagerstabilität ergeben. In der Praxis werden deshalb vor allem Polyvinylalkohole verwendet, die jedoch ebenfalls gewisse Nachteile besitzen. Sie sind für manche optische Aufheller weniger geeignet, schlecht in Wasser löslich, und auch das Netzvermögen ist schlecht, so daß der Aufheller bei der Mahlung nur langsam benetzt wird, was zu einer langen Mahldauer führt. Einige Polyvinylalkoholtypen ergeben Dispersionen, die nicht lagerstabil sind, d. h. nach einiger Zeit bildet sich ein gummiartiger Bodenbelag, der den Aufheller angereichert enthält. Außerdem unterstützen die Polyvinylalkohole die Applikation des Aufhellers auf die Ware nicht.

Es wurde nun überraschenderweise gefunden, daß eine Vielzahl von wasserunlöslichen optischen Aufhellern, insbesondere schwierig zu applizierende optische Aufheller für das Thermosolverfahren, in einfacher und sicherer Weise in lagerstabile wäßrige Dispersionen mit wesentlich verbesserten färbetechnischen Eigenschaften überführt werden können, wenn als Dispergiermittel ein wasserlöslicher oder in Wasser dispergierbarer, Phosphonsäureestergruppen enthaltender Polyester verwendet wird.

Die Erfindung betrifft demgemäß eine Präparation zum Aufhellen von Synthesefasern, bestehend aus einer wäßrigen, Dispergiermittel und gegebenenfalls weitere Zusätze enthaltenden Dispersion eines feinverteilten optischen Aufhellers oder mehrerer feinverteilter optischer Aufheller. Die erfindungsgemäße Präparation ist dadurch gekennzeichnet, daß als Dispergiermittel ein wasserlöslicher oder ein in Wasser dispergierbarer Phosphonsäureestergruppen enthaltender Polyester verwendet wird. Die Erfindung betrifft auch ein Verfahren zur Herstellung der Präparation und ihre Verwendung zum Aufhellen von Synthesefasern.

Als wasserlöslicher bzw. in Wasser dispergierbarer Phosphonsäureestergruppen enthaltender Polyester wird insbesondere ein Polymischester mit einem scheinbaren, mittleren Molekulargewicht von 800 bis 5000, vorzugsweise 1000 bis 3000, gemessen im Dampfdruckosmometer mit Dimethylformamid als Lösungsmittel verwendet, der mindestens zu 5%, vorzugsweise zu 20 bis 50%, aus Kettengliedern besteht, die eine oder mehrere Phosphonsäureestergruppen der allgemeinen Formel I enthalten

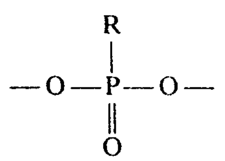

(I)

worin R = Wasserstoff, einen aliphatischen, cycloaliphatischen, aromatischen oder araliphatischen Rest bedeutet und der aliphatische Rest, sowie der aliphatische Teil des araliphatischen Rests auch durch Sauerstoff ein- oder mehrfach unterbrochen sein kann. Insbesondere bedeutet R Wasserstoff, einen aliphatischen Rest mit 1 bis 22 C-Atomen, der auch durch Sauerstoff ein- oder mehrfach unterbrochen sein kann, einen cycloaliphatischen Rest mit 5 bis 8 C-Atomen, Phenyl, Naphthyl, wobei der Phenyl- oder Naphthylrest auch durch bis zu 3 Alkylreste mit je 1 bis 6 C-Atomen substituiert sein kann, einen durch Phenyl substituierten aliphatischen Rest mit 1 bis 12 C-Atomen im aliphatischen Rest, der auch durch Sauerstoff ein- oder mehrfach unterbrochen sein kann.

Der erfindungsgemäß als Dispergiermittel verwendete Polyester wird dadurch hergestellt, daß zweibasische, für die Polyesterherstellung geeignete Säuren A und/oder deren Derivate, insbesondere deren Ester, Säurehalogenide oder Anhydride mit Dialkoholen B oder deren niedrigen Carbonsäureestern im Molverhältnis A : B = (80 bis 140) : (80 bis 140), vorzugsweise (80 bis 120) : (90 bis 130), in an sich bekannter Weise bis zu einem scheinbaren mittleren Molekulargewicht von 800 bis 5000, vorzugsweise 1000 bis 3000, kondensiert und dabei die Ausgangsverbindungen so ausgewählt werden, daß mindestens 5%, vorzugsweise 20 bis 50%, der den Polyester bildenden Kettenglieder Phosphonsäureestergruppen der Formel I enthalten.

Geeignete zweibasische Säuren A für die Herstellung des Polyesters sind:

A, a) aromatische, araliphatische, cycloaliphatische und aliphatische Dicarbonsäuren,
b) aliphatische, cycloaliphatische, araliphatische und aromatische Phosphonsäuren bzw.
c) Derivate von A, a) und A, b), insbesondere deren Ester, Säurehalogenide oder Anhydride sowie Gemische der Substanzen A, a), A, b) und/oder A, c).

Für die unter A, a) genannten Dicarbonsäuren kommen alle zur Polyesterherstellung brauchbaren Dicarbonsäuren der Formel

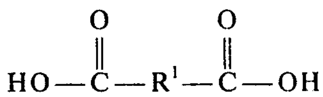
(II)

bzw. als Verbindungen A, c) deren entsprechende Säurehalogenide, Anhydride oder Ester in Betracht, die in den fertigen Polyestern das Kettenglied

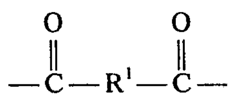
(III)

einbauen, wobei $R^1$ eine direkte Bindung oder einen divalenten aliphatischen, cycloaliphatischen, aromatischen oder araliphatischen Rest darstellt, dessen Kohlenstoffgerüst auch durch Heteroatome, wie z. B. Sauerstoff oder Schwefel, oder Heterogruppen, wie z. B. $-SO_2-$, ein- oder mehrfach unterbrochen sein kann. Vorzugsweise bedeutet $R^1$ einen divalenten aliphatischen Rest mit 2 bis 10 C-Atomen, einen divalenten cycloaliphatischen Rest mit 6 bis 8 C-Atomen, einen divalenten aromatischen Rest mit 6 bis 12 C-Atomen oder einen araliphatischen Rest mit 6 bis 14 C-Atomen. Beispiele für geeignete aliphatische, cycloaliphatische, aromatische und araliphatische Dicarbonsäuren sind: Oxal-, Malon-, Bernstein-, Methylmalon-, Glutar-, Dimethylmalon-, Adipin-, Pimelin-, Kork-, 2,2-Dimethylglutar-, Azelain-, Trimethyladipin-, Sebacin-, Fumar-, Malein-, Itacon-, Citracon-, Mesacon-, Traumatin-, Mucon-, 1,2-Cyclohexan-di-carbon-, 1,3-Cyclohexan-dicarbon-, 1,4-Cyclohexan-dicarbon-, Norbornandicarbon-, Phthal-, Isophthal-, Terephthal-, 1,4-Naphthalin-dicarbon-, 2,5-Naphthalin-dicarbon-, Diphen-säure und Säuren der allgemeinen Formel

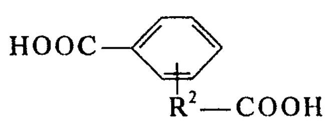
(IV)

wobei $R^2$ einen in ortho, meta oder para stehenden Alkylenrest mit 2 bis 4 C-Atomen bedeutet, z. B. 4-Carboxyphenylessigsäure, 3- bzw. 4-Carboxyhydrozimtsäure, 2- bzw. 4-Carboxy-$\gamma$-phenylbuttersäure. Bevorzugt sind die aromatischen Dicarbonsäuren Isophthal- und Terephthalsäure wegen ihrer schweren Verseifbarkeit. Beispiele für Dicarbonsäuren, deren Kohlenstoffgerüst durch Heteroatome, wie Sauerstoff oder Schwefel oder Heterogruppen, wie $-SO_2-$, unterbrochen ist, sind Diglykolsäure, Thiodiglykolsäure, Thiodipropionsäure, 4,4'-Oxydibenzoesäure, 4,4'-Sulfonyldibenzoesäure und

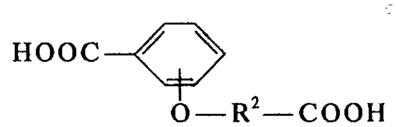
(V)

wobei $R^2$ einen Alkylenrest mit 2 bis 4 C-Atomen bedeutet und die Seitenkette in ortho-, meta- oder para-Stellung zur Carboxylgruppe des Kerns stehen kann.

Die genannten Dicarbonsäuren können, wie bereits erwähnt, auch in Form ihrer Derivate, insbesondere in Form ihrer Ester, Anhydride oder Säurehalogenide eingesetzt werden. Als Säurehalogenide werden die Säurechloride bevorzugt. Als Ester kommen Mono- oder Diester mit niederen, d. h. leicht abdestillierbaren Monoalkoholen, also vorzugsweise solche mit 1 bis 4 Kohlenstoffatomen, aber auch solche mit den noch zu nennenden Dialkoholen in Betracht. Geeignete Ester, Anhydride und Säurechloride sind zum Beispiel: Dimethyl-, Diäthyl-, Di-n-propyl-, Di-isopropyl- und Di-n-butylester der Terephthalsäure; Dimethyl-, Diäthyl-, Di-n-propyl-, Di-n-butyl-, Di-isobutylester der Isophthalsäure; Dimethyl-, Diäthyl-, Di-n-propyl-, Di-isopropyl-, Di-n-butylester der Phthalsäure; Malonsäure-dimethyl-, -diäthyl-, -di-n-propyl- oder -di-n-butylester; Bernsteinsäure-dimethyl- oder -di-n-butylester; Glutarsäure-diäthyl-oder -di-isopropylester; Adipinsäure-diäthyl- oder -di-isobutylester; Pimelinsäuredimethyl-, -di-isopropyl- oder -di-n-butylester; Maleinsäure-dimethyl-, -di-isopropyl- oder -di-n-butylester; Korksäure-dimethyl, -diäthyl-, -di-n-propyl- oder -di-n-butylester; 1,4-Cyclohexan-dicarbonsäure-dimethyl-, - diäthyl-, -di-n-propyl-, -di-n-butylester; 1,2-Cyclohexan-dicarbonsäure-dimethyl-, -diäthyl-, -di-n-propyl-, -di-n-butylester; 1,3-Cyclohexan-dicarbonsäure-dimethyl-, -diäthyl-, -di-n-propyl-, -di-n-butylester; Phthalsäureanhydrid, Maleinsäureanhydrid, Bernsteinsäure-anhydrid, Phthalylchlorid.

Die vorstehend unter A, b) genannten Phosphonsäuren besitzen die allgemeine Formel VI und führen das Kettenglied der allgemeinen Formel VII

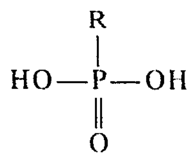

(VI)

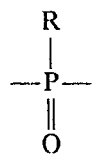

(VII)

in den Polyester ein. R hat dabei die bereits genannte Bedeutung. Beispiele für geeignete Phosphonsäuren sind: Methan-, Äthan-, n-Propan-, i-Propan-, n-Butan-, n-Buten-2-, i-Butan-, n-Octan-, i-Octan-, Decan-, Dodecan-, Octadecan-, Nonadecan-, Docosan-phosphonsäure, Cyclopentan-, Cyclohexan-, Benzol-, α-Naphthalin-, β-Naphthalin-phosphonsäure, 3-Oxapentanphosphonsäure, 4-Oxaheptan-, 4,8-Dioxaundecan-phosphonsäure, Phosphonsäuren der allgemeinen Formel

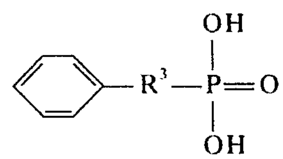

(VIII)

wobei $R^3$ ein Alkylenrest mit 1 bis 12 C-Atomen bedeutet, der auch durch Sauerstoff ein- oder mehrfach unerbrochen sein kann, z. B.

Benzyl- oder Phenäthyl-phosphonsäure, $C_6H_5CH_2OCH_2CH_2PO(OH)_2$; $C_6H_5CH_2CH_2OCH_2CH_2OCH_2CH_2PO(OH)_2$.

Auch die Phosphonsäuren können, wie bereits erwähnt, in Form ihrer Derivate, insbesondere in Form ihrer Mono- oder Diester mit niederen, d. h. leicht abdestillierbaren Monoalkoholen, vorzugsweise solchen mit 1 bis 4 C-Atomen oder den noch zu nennenden Dialkoholen oder in Form ihrer Halogenide, insbesondere Chloride oder in Form ihrer Anhydride verwendet werden. Die phosphorige Säure wird zweckmäßigerweise nur in Form ihrer Ester, insbesondere ihrer Ester mit Alkoholen mit 1 bis 4 C-Atomen, z. B. als Diäthylphosphit, eingesetzt.

Geeignete Dialkohole B zur Herstellung des Polyesters sind:

B, a) aliphatische, cycloaliphatische, araliphatische Diole, worunter auch äthergruppenhaltige aliphatische, cycloaliphatische Diole, sowie äthergruppenhaltige aliphatische, cycloaliphatische Diole mit einem aromatischen Ringsystem im Molekül bzw. deren Acylderivate mit leichtflüchtigen, niederen Carbonsäuren ($C_1$ bis $C_4$) zur verstehen sind,

b) Di-ester von Phosphonsäuren oder Polyphosphonsäuren mit Diolen bzw.

c) Gemische aus Diolen B, a) und/oder B, b).

Die unter B, a) genannten Diole besitzen die allgemeine Formel IX und bauen in den fertigen Polyestern Kettenglieder der allgemeinen Formel X ein

$$HO-R^4-OH \quad (IX)$$

$$-O-R^4-O- \quad (X)$$

wobei $R^4$ einen divalenten aliphatischen, cycloaliphatischen oder araliphatischen Rest darstellt, dessen Kohlenstoffgerüst durch Sauerstoff (Ätherbrücken) und/oder aromatische Kerne und/oder $-C_6H_5-SO_2-C_6H_5$-Reste ein- oder mehrfach unterbrochen sein kann. Insbesondere bedeutet $R^4$ einen divalenten aliphatischen Rest mit 2 bis 6 C-Atomen, vor allem einen divalenten aliphatischen Rest, der durch Sauerstoff (Ätherbrücken) und/oder aromatische Kerne (insbesondere Phenylen- oder Naphthylen-Kerne) und/oder $-O-C_6H_5-SO_2-C_6H_5-O$-Reste ein- oder mehrfach unterbrochen sein kann. Bei derartigen Resten bezieht sich der angegebene, bevorzugte Bereich von 2 bis 6 C-Atomen lediglich auf ein aliphatisches Teilglied zwischen zwei Sauerstoffatomen oder aromatischen Kernen oder

$-O-C_6H_5-SO_2-C_6H_5-O$-Resten. Derartige Reste können ein Molekulargewicht bis 10 000 und gegebenenfalls noch höher besitzen und können sich beispielsweise von einem Polyäthylenglykol, einem Äthylenpropylen-polyglykol oder einem Polypropylenglykol ableiten. Insbesondere bedeutet $R^4$ auch einen divalenten cycloaliphatischen Rest mit 5 bis 10 Kohlenstoffatomen oder einen divalenten araliphatischen Rest mit 8 bis 14 Kohlenstoffatomen, dessen aliphatischer Teil auch durch Sauerstoff ein- oder mehrfach unterbrochen oder durch Sauerstoff an den aromatischen Kern gebunden sein kann.

Beispiele für geeignete Diole sind: Äthylenglykol; Propandiol-1,2 und Propandiol-1,3 (Trimethylenglykol); Butandiole, insbesondere Butandiol-1,4; Pentandiole, wie Pentandiol-1,5; Hexandiole, insbesondere Hexandiol-1,6; Decandiol-1,10; Diäthylenglykol, Äthylenpropylenglykol-1,2; Äthylenpropylenglykol-1,3; Dipropylenglykol; Triäthylenglykol, Tetraäthylenglykol; Tripropylenglykol; Polyäthylenglykole bis zu einem Molekulargewicht von 10 000; Polypropylenglykole bis zu einem Molekulargewicht von 10 000 oder höher; Polyäthylen-polypropylen-mischglykole (sog. »Pluronics ®«) bis zu einem Molekulargewicht von 10 000 oder höher; Bis-(4-hydroxybutyl)-äther; 2,4-Dimethyl-2-äthylhexan-diol-1,3; 2-Äthyl-2-butyl-propandiol-1,3; 2,2-Dimethyl-propandiol-1,3; 2-Äthyl-2-isobutylpropandiol-1,3; 2,2,4-Trimethyl-hexandiol-1,6; 1,3-Dihydroxy-cyclohexan; 1,4-Dihydroxy-cyclohexan (Chinit); 1,4-Bis-(hydroxymethyl)cyclohexan; 1,3-Bis(hydroxymethyl)cyclohexan; 1,2-Bis(hydroxymethyl)cyclohexan, 1,4-Bis(hydroxymethyl)benzol, 1,2-Bis(hydroxymethyl)benzol, 2,6-Bis(hydroxymethyl)naphthalin. Ferner sind als Diole beispielsweise Diphenole geeignet, die durch zweiseitige Umsetzung mit Äthylenoxid in araliphatischer Bishydroxyverbindungen übergeführt worden sind und denen z. B. die allgemeine Formel

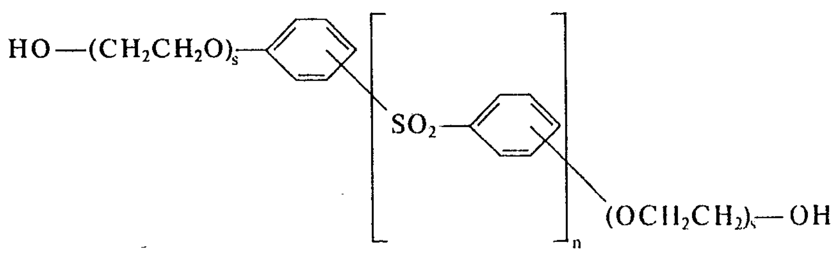

(XI)

worin n = 0 oder 1, s = 1 bis 20 und die Bindungen an den Benzolkernen in ortho-, meta- oder para-Stellung stehen können, oder die allgemeine Formel

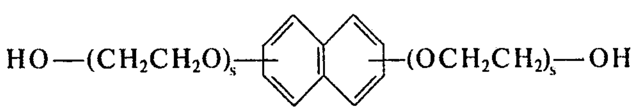

(XII)

worin s = 1 bis 20 ist, zugeordnet werden kann. Bei geeigneten Vertretern der allgemeinen Formel XI ist z. B. n = 0 und s = 1; n = 1 und s = 1; n = 0 und s = 2; n = 1 und s = 2.

Die Vertreter der für B, a) genannten Diole können auch als Ester mit leichtflüchtigen Carbonsäuren, wie z. B. Ameisen-, Essig- oder Propionsäure, eingesetzt werden.

Die unter B, b) genannten Di-Ester von Phosphonsäuren oder Polyphosphonsäuren mit Diolen besitzen insbesondere folgende allgemeine Formeln

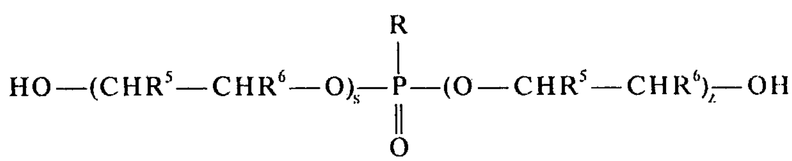

(XIII)

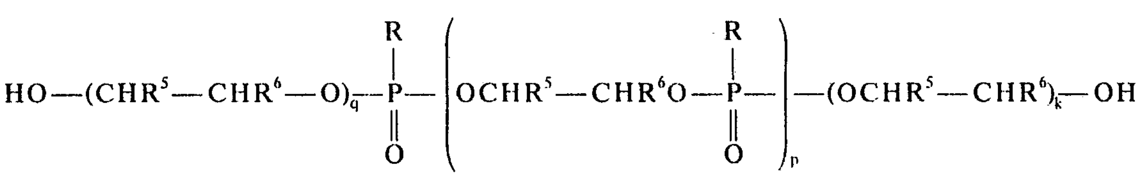

(XIV)

und bauen in den fertigen Polyester die Kettenglieder

$$-O-(CHR^5-CHR^6-O)_s-\underset{\underset{\displaystyle O}{\|}}{\overset{\overset{\displaystyle R}{|}}{P}}-(O-CHR^5-CHR^6)_z-O- \qquad (XIII\,a)$$

$$-O-(CHR^5-CHR^6-O)_q-\underset{\underset{\displaystyle O}{\|}}{\overset{\overset{\displaystyle R}{|}}{P}}-\left(OCHR^5-CHR^6O-\underset{\underset{\displaystyle O}{\|}}{\overset{\overset{\displaystyle R}{|}}{P}}-\right)_p-(OCHR^5-CHR^6)_k-O- \qquad (XIV\,a)$$

ein, worin R die bereits genannte Bedeutung hat und vorzugsweise Alkyl mit 1 bis 4 C-Atomen, insbesondere n-Propyl, bedeutet und $R^5$, $R^6 = -CH_3$, $-C_2H_5$ oder vorzugsweise H, p = 1 bis 10, vorzugsweise 1 bis 2, s und z = 1 bis 20, q und k = 0, 1, 2 oder 3, vorzugsweise 1, bedeuten. Die Verbindungen der allgemeinen Formeln XIII und/oder XIV werden zweckmäßigerweise als Gemische eingesetzt. Auch diese Verbindungen können als Ester mit leichtflüchtigen Carbonsäuren eingesetzt werden. Von den Verbindungen der Formeln XIII und XIV sind die der Formeln XIV bevorzugt.

Um eine ausreichende Wasserlöslichkeit des fertigen Polyesters sicherzustellen, werden die Diole der Gruppe B so ausgewählt, daß mindestens die Hälfte ihrer eingesetzten Molmenge aus wasserlöslichen, äthergruppenhaltigen Vertretern besteht, die in den fertigen Polyester die Kettenglieder

$$-OCH_2CH_2-(OCH_2CH_2)_r-O-$$

und/oder

$$-O\underset{\displaystyle CH_3}{\underset{|}{C}}HCH_2-\left(O\underset{\displaystyle CH_3}{\underset{|}{C}}HCH_2\right)_t-O-$$

und/oder

$$-OCH_2CH_2O\underset{\displaystyle CH_3}{\underset{|}{C}}HCH_2-\left(OCH_2CH_2O\underset{\displaystyle CH_3}{\underset{|}{C}}HCH_2\right)_u-O-$$

und/oder

$$-(OCH_2CH_2)_w-\left(O\underset{\displaystyle CH_3}{\underset{|}{C}}HCH_2\right)_x-(OCH_2CH_2)_y-O-$$

einbauen, wobei r eine Zahl von 1 bis 230, vorzugsweise 1 oder 40 bis 53, t eine Zahl von 1 bis 175 und u eine Zahl von 1 bis 100 bedeutet. w, x, y sind Zahlen gleich oder größer als 1 und so groß, daß die Gruppierung ein Molgewicht von bis zu 10 000 erreicht. Die vorgenannten Gruppierungen werden insbesondere von Diäthylenglykol (r = 1), Triäthylenglykol (r = 2), Polyäthylenglykolen (r = 4 bis 230), Dipropylenglykol (t = 1) und Polyäthylen-propylen-glykolen (u = 1 bis 100) oder von Verbindungen mit einem Molgewicht bis 10 000 eingebaut, die durch Umsetzung von Polypropylenglykol mit Äthylenoxid entstehen und die deshalb in der Regel mindestens die Hälfte der eingesetzten Molmenge der Verbindungen der Gruppe B stellen. Bevorzugt werden Gemische aus Diäthylenglykol mit Polyäthylenglykol 2000, vor allem solche mit 20 bis 50 Mol-% Polyäthylenglykol 2000.

Anstelle von je einem Molekül einer Dicarbonsäure der Gruppe A und je einem Molekül eines Diols der Gruppe B können auch zwei Moleküle einer Hydroxysäure C oder deren Derivate, insbesondere deren Ester mit niederen Monoalkoholen oder Diolen oder deren innere Ester verwendet werden. Als derartige Hydroxysäuren C können a) Hydroxycarbonsäuren und b) Hydroxyphosphonsäuren oder Mischungen von beiden verwendet werden.

Hydroxycarbonsäuren der allgemeinen Formel XV bauen in den fertigen Polyester Kettenglieder der allgemeinen Formel XVI

$$HO—R^7—COOH \quad (XV)$$

$$—O—R^7—CO— \quad (XVI)$$

ein, wobei $R^7$ einen divalenten aliphatischen, cycloaliphatischen oder araliphatischen Rest darstellt, dessen Kohlenstoffgerüst auch durch Heteroatome, insbesondere Sauerstoff, ein- oder mehrfach unterbrochen sein kann. Vorzugsweise bedeutet $R^7$ einen divalenten aliphatischen Rest mit 1 bis 10 Kohlenstoffatomen, einen divalenten cycloaliphatischen Rest mit 6 bis 11 Kohlenstoffatomen, einen divalenten araliphatischen Rest mit 6 oder 12 Kohlenstoffatomen im aromatischen Kern, wobei bei dem araliphatischen Rest der aliphatische Teil vom aromatischen Teil auch durch ein Heteroatom getrennt und/oder der aliphatische Teil auch durch ein oder mehrere Heteroatome, insbesondere Sauerstoff, unterbrochen sein kann, insbesondere araliphatische Reste der allgemeinen Formeln XVII und XVIII

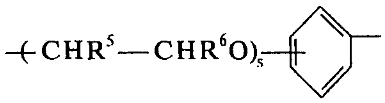
(XVII)

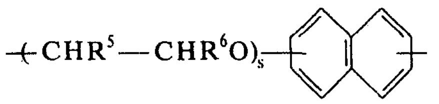
(XVIII)

wobei $R^5$, $R^6$ und s die bereits genannten Bedeutungen besitzen. Beispiele für geeignete Hydroxycarbonsäuren sind Glykolsäure, Milchsäure, 3-Hydroxypropionsäure, 4-Hydroxybuttersäure, 5-Hydroxypentansäure, 5-Hydroxypentan-3-säure, Mandelsäure, 3-Hydroxymethyl-cyclohexan-carbonsäure, 4-Hydroxymethyl-cyclohexancarbonsäure, 6-Hydroxymethyl-decalin-carbonsäure-(2), meta- und para-Hydroxyäthoxy-benzoesäure.

Als Beispiele für geeignete Ester von Hydroxycarbonsäuren sind zu nennen: Milchsäure-methyl-ester, Milchsäure-äthylester, 4-Hydroxybuttersäure-methylester, Mandelsäure-äthylester, para-Hydroxyäthoxy-benzoesäuremethylester. Beispiele für geeignete innere Ester von Hydroxycarbonsäuren sind Butyrolacton und Valerolacton.

Als Hydroxyphosphonsäuren werden im Rahmen der vorliegenden Erfindung, insbesondere Verbindungen der allgemeinen Formeln

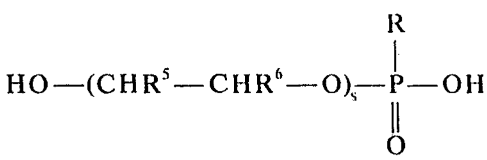
(XIX)

bzw.

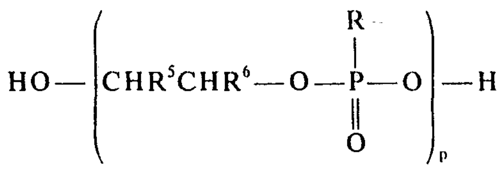
(XX)

verstanden, die in den Polyester Kettenglieder der allgemeinen Formeln

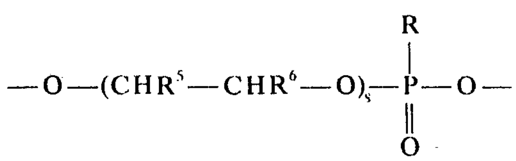
(XIX a)

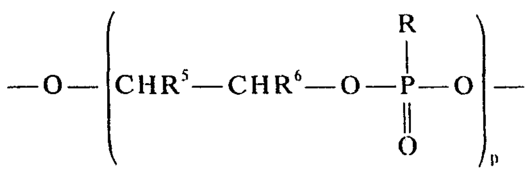
(XX a)

einbauen, wobei R, $R^5$, $R^6$ die bereits genannten Bedeutungen besitzen und s = 1 bis 20 und p = 1 bis 10 bedeuten. Geeignete innere Ester von Hydroxyphosphonsäuren sind 2-Oxo-1,3,2-dioxaphospholane der allgemeinen Formel

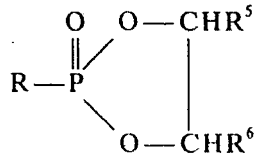

(XXI)

worin R, $R^5$ und $R^6$ die bereits genannten Bedeutungen besitzen. Geeignete Vertreter derartiger Hydroxyphosphonsäuren und Phospholane sind z. B.

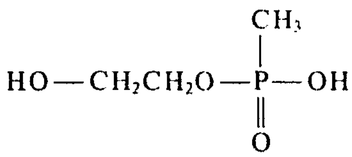

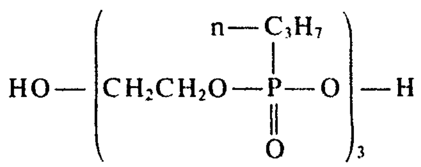

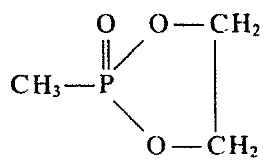

Beim Einsatz von Hydroxysäuren C wird die halbe Molmenge den zweibasischen Säuren der Gruppe A und die andere halbe Molmenge den Diolen der Gruppe B zugerechnet. Bei der Verwendung von z. B. m Mol von Verbindungen der allgemeinen Formel XX werden m · p Mol Phosphonsäureester-Gruppen in den Polyester eingebaut.

Zur Herstellung des Polyesters können anstelle der monomeren Bausteine A, B oder C natürlich auch niedere Vorkondensate oder Oligomere aus den vorgenannten Bausteinen eingesetzt werden, wie z. B.

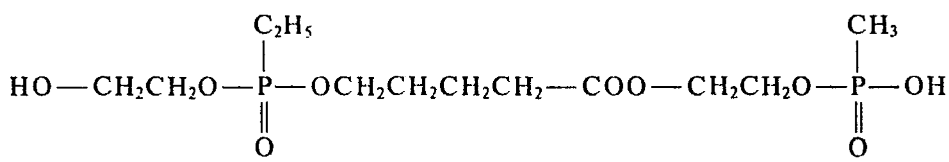

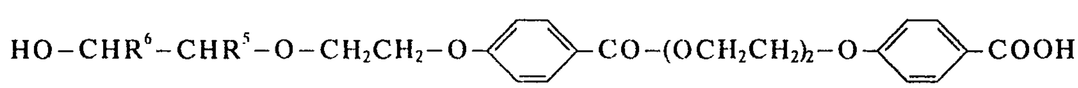

wobei $R^6$ und $R^5$ die bereits genannten Bedeutungen besitzen. Auch die Diester der Phosphon- oder Polyphosphonsäuren der allgemeinen Formeln XIII oder XIV können als Vorkondensate bzw. Oligomere aufgefaßt werden.

Aus den für die Verbindungsklassen A, B und C angegebenen Verbindungen, z. B. der allgemeinen Formeln II, VI, IX, XIII, XIV, XV, XIX, XX, baut sich der fertige Polyester z. B. schematisch in einem Abschnitt des Moleküls wie folgt auf:

—A—B—A—C—C—B—A—

wobei –A–, –B–, –C–, für ein Kettenglied steht, das aus einer unter den Klassen A, B und C genannten Verbindungen durch Kondensation bei der Herstellung des Polyesters resultiert. Die Reste der allgemeinen Formeln III, VII, X, XIII a, XIV a, XVI, XIX a und XX a sind Beispiele für derartige Kettenglieder.

Die phosphonsäureestergruppenhaltigen Ausgangsprodukte sind leicht zugänglich und sind zum Teil preiswerte Handelsprodukte (z. B. der Hoechst AG, Deutschland); sie können, wie auch die anderen Ausgangsprodukte, leicht nach den für die jeweilige Verbindungsklasse bekannten Verfahren hergestellt werden. Die Herstellung von Verbindungen der allgemeinen Formeln XIII, XIV, XIX und XX ist z. B. in der DE-OS 27 26 478 beschrieben.

Bezogen auf alle im Polyester vorhandenen Kettenglieder enthält der Polyester mindestens 5%, vorzugsweise 20 bis 50%, Phosphonsäureestergruppen der Formel I.

Die Herstellung der Polyester durch Kondensation der Ausgangskomponenten wird wie üblich bei erhöhter Temperatur von 100 bis 280°C, insbesondere 150 bis 250°C, vorzugsweise unter einer Atmosphäre eines inerten Gases, wie z. B. Stickstoff oder Kohlendioxid, und/oder unter vermindertem Druck und zweckmäßigerweise unter Rühren durchgeführt, wobei die flüchtigen Kondensationsprodukte (Wasser und/oder Alkohole und/oder niedere Carbonsäuren), sowie gegebenenfalls überschüssige Ausgangskomponenten, meistens ein Diol, abdestilliert werden. Bei Anwendung von Normaldruck kann es zweckmäßig sein, gegen Ende der Kondensation ein Vakuum von z. B. 10 bis 30 mbar und gegebenenfalls danach noch ein solches von ca. 1 bis 3 mbar oder gegebenenfalls noch darunter anzulegen, um die flüchtigen Produkte weitgehend zu entfernen. Die Kondensation dauert normalerweise 3 bis 20 Stunden und wird soweit geführt, bis das gewünschte scheinbare mittlere Molekulargewicht von 800 bis 5000, vorzugsweise 1500 bis 3000, erreicht ist. Die für die Kondensation verwendeten Ausgangsmaterialien können alle zunächst gemischt und dann gemeinsam kondensiert werden. Bei diesem Vorgehen liegen im Polyester die Bausteine in statistischer Verteilung vor. Der Polyester kann aber auch dadurch erhalten werden, daß zunächst nur ein Teil der Ausgangsmaterialien vorkondensiert wird und der Rest dann anschließend in beliebiger Reihenfolge und in beliebigem zeitlichen Abstand mit dem Vorkondensat weiterkondensiert wird.

Die Polykondensationsreaktion kann sowohl mit den üblichen Veresterungs- bzw. Umesterungskatalysatoren durchgeführt werden, wie auch ganz ohne solche Katalysatoren. Beispielsweise können als Veresterungs- bzw. als Umesterungskatalysatoren Alkalihydroxide, wie Natrium- oder Kaliumhydroxid oder Alkalialkoholate, wie Natriummethylat oder -äthylat, Erdalkalioxide oder -hydroxide, wie z. B. die entsprechenden Calcium- oder Magnesiumverbindungen sowie ferner auch Zink- oder Cadmiumoxid, Salze von organischen Carbonsäuren, wie Natrium-, Calcium-, Mangan- oder Zinkacetat oder -formiat organische Titanverbindungen, insbesondere die Titanalkoholate, wie z. B. Titanisopropylat oder Titanbutylat u. a. verwendet werden. Die anzuwendenden Mengen sind vor allem von der Wirksamkeit des jeweiligen Katalysators abhängig. Die Katalysatormenge wird normalerweise so gering wie möglich gehalten. Wenig geeignet sind saure Katalysatoren, weil sie das bevorzugte Diol Diäthylenglykol in Dioxan verwandeln und damit weitgehend den Kettenbildungsreaktionen entziehen.

Es ist anzunehmen, daß bei manchen phosphonsäureestergruppenhaltigen Ausgangskomponenten im Verlauf der Kondensation Kettenbrüche stattfinden und sich die Bruchstücke zu neuen Verbindungen zusammenschließen. So wird z. B. die Verbindung

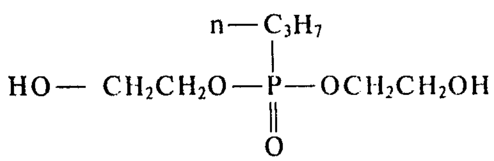

wahrscheinlich nicht vollständig direkt einkondensiert, sondern möglicherweise erst nach einer Umlagerung in

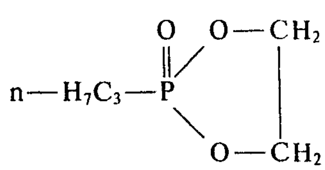 + HO—$CH_2CH_2$—OH

über eine erneute Ringöffnung durch eine andere Hydroxy-Endgruppe. Es steht auch nicht fest, welcher Anteil der Phosphonsäureestergruppen schließlich im Ketteninnern und welcher am Kettenende eingebaut wird. Der relativ niedrige pH-Wert der Polyester könnte für einen hohen Anteil an Phosphonsäurehalbestergruppen an den Kettenenden sprechen. Deshalb werden die erhaltenen Polyester in wäßriger Lösung mit Alkalien, wie z. B. Natrium- oder Kaliumhydroxid, oder Ammoniak neutral gestellt. Die erhaltenen Polyester werden mit Wasser zweckmäßigerweise auf eine Anwendungskonzentration von ca. 30 bis ca. 60 Gew.-% eingestellt.

Die Bestimmung des scheinbaren mittleren Molekulargewichts erfolgt im Dampfdruckosmometer in Dimethylformamid als Lösungsmittel. Der Meßwert ist ein hinreichend genaues Kriterium zur Charakterisierung der Polyester. (Die Bestimmung des Molekulargewichts im Dampfdruckosmometer ist beschrieben von S. Kume und H. Kobayashi in Makromol. Chem. 79 [1964] 1 bis 7.)

Zur Herstellung der erfindungsgemäßen Präparationen kommen in Wasser schwer lösliche bis unlösliche optische Aufheller, insbesondere aus folgenden Verbindungsklassen und ihren nichtionischen Substitutionsprodukten in Betracht:

Bis-benzoxaolverbindungen, wie z. B. Naphthalin-1,4-bisbenzoxazol-(2) (vgl. z. B. DE-PS

12 82 592), Äthylen-1,2-bis-(5-methylbenzoxazol)-(2) (vergl. z. B. DE-PS 10 40 535), Thiophen-2,5-bisbenzoxazol-(2); Benzoxazolstilbenverbindungen, wie z. B. 4-Benzoxazol-2-yl-4'-phenylstilben (vgl. DE-AS 15 94 834), 4-Benzoxazol-2-yl-4'-[3-methyl-(1,2,4-oxadiazol)-5-yl]-stilben, 4-Benzoxazol-2-yl-4'-carbomethoxy-stilben, 2-(4-Cyanstyryl)-5,6-dimethylbenzoxazol; Naphthalimide, wie z. B. 4-Methoxy-N-methylnaphthalimid, 4,5-Dimethoxy-N-methylnaphthalimid; Bis-äthylenaryle, wie z. B. 1,4-Bis-(2-cyanstyryl-ω)-benzol, 1,4-Bis-(4-cyanstyryl-ω)-benzol; Pyrazoline, wie z. B. 1-(4-Sulfamoylphenyl)-3-(4-chlorphenyl)-pyrazolin, 1-(4-(β-Oxäthylsulfonyl)-phenyl)-3-(4-chlorphenyl)-pyrazolin; Cumarine (vgl. z. B. BE-PS 6 07 116 und 6 11 489), wie z. B. 3-Phenyl-7-(3-methylpyrazol-1-yl)-cumarin, 3-(4-Chlor-1,2-pyrazol-1-yl)-7-(3-phenyl-4-methyl-1,2,3-triazol-2-yl)-cumarin; substituierte Pyrene (vgl. DE-PS 12 73 479), wie z. B. 4,6-Dimethoxy-1,3,5-triazinyl-pyren; Benzofuranylstyrylverbindungen (vgl. DE-PS 21 05 305); Benzofuranyloxadiazolverbindungen (vgl. DE-OS 24 05 063); 1,2,4-Oxadiazolverbindungen (vgl. DE-OS 27 09 924).

Selbstverständlich können die erfindungsgemäßen Präparationen auch Gemische zweier oder mehrerer optischer Aufheller enthalten. In einigen Fällen findet man dabei synergistische Effekte, d. h. der mit einer derartigen Präparation erreichbare Weißgrad liegt über dem Weißgrad von Präparaten der einzelnen Mischungskomponenten.

Die erfindungsgemäßen Präparationen bestehen aus wäßrigen Dispersionen mit normalerweise 4 bis 30 Gew.-% des wasserunlöslichen oder schwer in Wasser löslichen optischen Aufhellers oder eines Gemisches aus zwei oder mehreren derartigen optischen Aufhellern und 5 bis 50 Gew.-%, vorzugsweise 15 bis 25 Gew.-%, bezogen auf Festkörper, des wasserlöslichen oder in Wasser dispergierbaren Phosphonsäureestergruppen enthaltenden Polyesters und gegebenenfalls weiterer üblicher Zusätze, wie z. B. Antischaummittel, Netzmittel, Fungizide, Mahlhilfsmittel etc. Zur Herstellung der erfindungsgemäßen Präparation werden die Ausgangskomponenten Wasser, optischer Aufheller oder ein Gemisch von optischen Aufhellern, wasserlöslicher oder in Wasser dispergierbarer Phosphonsäureestergruppen enthaltender Polyester und gegebenenfalls weitere Zusätze nach an sich bekannten Naßmahlprozessen in eine Dispersion überführt. Die Augangskomponenten werden dabei z. B. mit Sand oder Glaskugeln als Mahlkörper in einer Rührwerkskugelmühle so lange vermahlen bis die gewünschte Feinverteilung der optischen Aufheller erreicht ist. In der Regel wird so lange vermahlen, bis 90% aller Teilchen der optischen Aufheller eine Größe von 2 µm oder kleiner erreicht haben. Dann wird vom Mahlkörper abgesiebt. Der Phosphonsäureestergruppen enthaltende Polyester wird zweckmäßigerweise in Form einer neutralen 30 bis 60gew.-%igen, vorzugsweise 40 bis 55gew.-%igen wäßrigen Lösung oder Dispersion eingesetzt. Es hat sich als zweckmäßig erwiesen, vor dem Mahlvorgang nur einen Teil der Gesamtmenge des Phosphorsäureestergruppen enthaltenden Polyesters zuzufügen und den Rest erst nach beendetem Mahlvorgang eventuell zusammen mit den übrigen Hilfsmitteln und weiterem Wasser einzurühren.

Die Menge des zum Mahlvorgang zugesetzten Phosphonsäureestergruppen enthaltenden Polyesters kann in weiten Grenzen schwanken und richtet sich in erster Linie nach der Viskosität des Mahlansatzes. Vorzugsweise werden zur Mahlung 3 bis 15 Gew.-% der Gesamtmenge des Phosphonsäureestergruppen enthaltenden Polyesters zugesetzt. In einigen Fällen kann es zweckmäßig sein, zusätzlich übliche anionische oder kationische Mahlhilfsmittel zuzufügen, wobei die kationischen Mahlhilfsmittel auch einen Fungizidschutz für die Präparation liefern.

Die erfindungsgemäßen Präparationen sind hervorragend lagerstabil. Der Test auf Lagerstabilität erfolgt an einer 50 ml Probe durch 6wöchige statische Lagerung bei 50°C. Nach dieser Zeit muß die Feinverteilung noch genauso gut sein wie die der frisch hergestellten Probe, der Aufheller darf also nicht aggregiert oder gar rekristallisiert sein. Ein leichter Bodenbelag — in den meisten Fällen bildet sich ein solcher — muß leicht aufrührbar sein. Selbstverständlich muß die Präparation nach dieser Lagerzeit die gleichen färbetechnischen Eigenschaften besitzen wie eine frisch hergestellte.

Die Prüfung auf Feinverteilung während des Mahlvorgangs und bei der Prüfung auf Lagerstabilität erfolgt an einer Probe, die ca. 0,5 bis 1% Aufheller enthält unter dem Lichtmikroskop bei ca. 400facher Vergrößerung.

Die erfindungsgemäßen Präparationen dienen zur Aufhellung von Materialien aus Synthesefasern, wie z. B. Fasermaterialien aus Polyacrylnitril, Polyamid, vorzugsweise Polyester, 2½-Acetat und Triacetat oder Mischungen dieser Fasern mit natürlichen Fasern, wie z. B. Baumwolle. Die Fasermaterialien können in den verschiedensten Formen, z. B. als Gewebe, Gewirke oder als gestrickte Ware aus Filament- oder Stapelfasern vorliegen. Die Anwendung der erfindungsgemäßen Präparationen zum Aufhellen der genannten Fasermaterialien erfolgt in an sich bekannter Weise nach den üblichen Färbeverfahren, z. B. nach dem HT-Verfahren, insbesondere aber nach dem Thermosol- und Heißluftfixierverfahren. Beim HT-Verfahren wird das aufzuhellende Material 30 bis 45 Minuten lang bei Temperaturen von 90 bis 130°C mit Färbeflotten behandelt, welche die optische Aufhellerwirksubstanz in Konzentrationen von 0,01 bis 1,0 Gew.-%, bezogen auf das Warengewicht, enthalten. Die Flotten können auch handelsübliche Färbereihilfsmittel enthalten. Beim Thermosolverfahren wird das Textilmaterial mit einer Flotte imprägniert, welche 0,25 bis 1,5 g/l der Aufhellerwirksubstanz enthält. Dann wird auf eine Gewichtszunahme von ca. 50 bis 120 Gew.-% abgequetscht, in der Regel zwischengetrocknet und die Ware dann einer kurzzeitigen Trockenhitzebehandlung ausgesetzt. Die erfindungsgemäßen Präparationen kann man jedoch auch aus langer Flotte auf die Ware aufziehen lassen, die dann abgequetscht,

getrocknet und dann thermosoliert wird.

Die erfindungsgemäßen Präparationen zeigen hervorragende färberische Eigenschaften, insbesondere eine Erhöhung des Weißgrades bzw. eine Verringerung der benötigten Menge an Aufhellern zur Erreichung desselben Weißgrades wie ohne Anwesenheit des Phosphonsäureestergruppen enthaltenden Polyesters.

Die Bestimmung des scheinbaren, mittleren Molekulargewichts erfolgt im Dampfdruckosmometer in Dimethylformamid als Lösungsmittel. Wegen der Dissoziation der Säuregruppen bzw. deren Salzen liegt das wirkliche Mittel des Molekulargewichts höher als der so gemessene, scheinbare Wert. Der Meßwert ist jedoch ein hinreichend genaues Kriterium zur Charakterisierung des Kondensationsgrades der erfindungsgemäßen Polymischester und zur Bestimmung des Endpunktes der Kondensation.

Die im Rahmen der vorliegenden Erfindung auch in Verbindung mit der Bezeichnung araliphatisch benutzte Bezeichnung aliphatisch steht insbesondere für Alkenyl- bzw. Alkenylen-, vor allem aber für Alkyl- bzw. Alkylenreste. Cycloaliphatische Reste sind insbesondere Cycloalkyl- bzw. Cycloalkylenreste. Aromatische Reste, auch in Verbindung mit der Bezeichnung araliphatisch, sind insbesondere solche, die einen sich vom Benzol oder Naphthalin ableitenden Rest enthalten.

In den nachfolgenden Beispielen bedeuten Prozentangaben — sofern nichts anderes angegeben — Gewichtsprozente. $W_B$ bedeutet Weißgrad nach Berger, $W_S$ bedeutet Weißgrad nach Stensby. Bei den Polyäthylenglykolen bedeutet die nachgestellte Zahl das Molekulargewicht.

## Beispiel 1

### a) Herstellung der Präparation

15 g des optischen Aufhellers der Formel

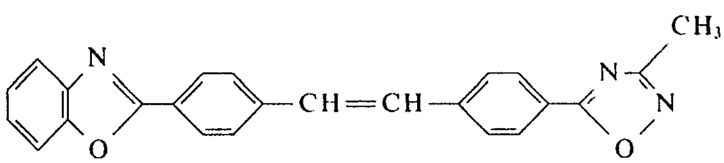

2 g einer 55%igen Lösung eines wasserlöslichen, Phosphonsäureestergruppen enthaltenden Polyesters, dessen Herstellung nachfolgende unter c) beschrieben ist, 1 g einer 50%igen Lösung von Cocosfettdimethylbenzylammoniumchlorid und 21 g entsalztes Wasser werden mit 400 g Glasperlen von 1 mm Durchmesser in einer 1-l-Rührwerkskugelmühle vermahlen. Nach etwa 6 bis 7 Stunden ist die geforderte Mahlfeinheit (90% aller Teilchen des optischen Aufhellers besitzen eine Größe von 2 µm oder kleiner) erreicht, und man gibt 76 g der 55%igen Lösung des wasserlöslichen Phosphonsäureestergruppen enthaltenden Polyesters zu, verrührt noch 30 Minuten lang und siebt dann vom Mahlkörper ab. 25 g dieses Mahlguts verrührt man nun mit 8,4 g der 55%igen Lösung des wasserlöslichen Phosphonsäureestergruppen enthaltenden Polyesters und 13,0 g entsalzten Wassers.

Man erhält eine Aufhellerpräparation, die 7% Aufhellerwirksubstanz und 30% des wasserlöslichen Phosphonsäureestergruppen enthaltenden Polyesters enthält.

### b) Anwendung der Präparation

14,3 g obiger Aufhellerpräparation werden in 1 l Wasser eingerührt. In diese Färbeflotte taucht man ein Polyestergewebe und quetscht zwischen zwei Walzen auf 70% Gewichtszunahme ab. Das Polyestergewebe wird dann bei 110°C getrocknet und danach 30 sec. bei 190°C einer Heißluftbehandlung unterworfen.

Löst man zum Vergleich 100 mg des oben genannten optischen Aufhellers in der Wärme in 100 ml Dimethylformamid, versetzt dann mit 5 ml eines Emulgators und gießt diese klare Lösung unter Rühren in eine Lösung von 8,5 ml des gleichen Emulgators in 76,5 ml Wasser, so erhält man eine Dispersion, die 1 g/Liter des optischen Aufhellers enthält. Färbt man nun unter den gleichen Bedingungen wie oben angegeben, so erhält man folgende Ergebnisse:

| | $W_B$ | $W_S$ |
|---|---|---|
| Vergleich | 161 | 157 |
| Erfindungsgemäße Präparation | 164 | 162 |

Stellt man sich, ähnlich wie oben beschrieben, durch Mahlung in einer Rührwerkskugelmühle eine Dispersion her, die 7% Aufheller und 4% eines teilverseiften Polyvinylalkohols enthält, und färbt wie oben beschrieben aus, dann erhält man auf Polyestergewebe nur ein stumpfes, gelblich grünes Weiß.

c) Herstellung des Phosphonsäureestergruppen enthaltenden Polyesters

In einem 2-Liter-Schliffvierhalskolben mit Rührer, Thermometer, Gaseinleitungsrohr und absteigendem Kühler werden 140,4 g (= 0,3 Mol) des Oligoadduktes der Formel

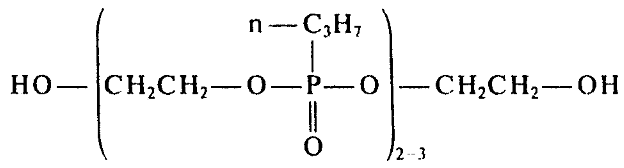

(Handelsprodukt der Hoechst AG, Frankfurt am Main), 69 g Diäthylenglykol (= 0,65 Mol), 200 g Polyäthylenglykol 2000 (= 0,2 Mol), 77,6 g Terephthalsäuredimethylester (= 0,4 Mol) und 4 g Titantetraisopropylat als Katalysator im Laufe einer Stunde unter Stickstoff und bei gutem Rühren auf 150°C geheizt. Die Temperatur wird dann stündlich um 10°C gesteigert, bis eine Innentemperatur von 200°C erreicht ist. Nun werden 74,8 g Isophthalsäure von 99%iger Reinheit (= 0,45 Mol) eingerührt und die Temperatur dann im Laufe von 2 Stunden gleichmäßig weiter bis 220°C gesteigert. Man heizt dann unter gutem Rühren 4 Stunden bei 220 bis 225°C, 2 Stunden bei 230 bis 235°C und 2 Stunden bei 240 bis 245°C. Bei letzterer Temperatur legt man dann noch 4 Stunden lang ein Vakuum von ca. 20 mbar an und zum Schluß noch ein solches von 1 bis 3 mbar. Man erhält 600 g einer hellen Schmelze, die mit Wasser und ca. 60 g 27%iger Natronlauge auf 1091 g zu einer 55%igen, neutralen farblosen, etwas viskosen Lösung verdünnt werden. Eine leichte Trübung kann durch Verrühren mit 1 bis 2% Kieselgur und Abpressen über ein Druckfilter leicht beseitigt werden. Das durchschnittliche, scheinbare Molekulargewicht dieses Polykondensats liegt bei 1850. Selbstverständlich kann man auch auf andere geeignete Konzentrationen verdünnen.

Sehr gut geeignete Polyesterkomponenten für die Herstellung von erfindungsgemäßen Präparationen erhält man auch bei folgenden, geringen Abweichungen von vorstehender Herstellungsvorschrift.

Abwandlung 1

Man verwendet anstelle von 0,2 Mol Polyäthylenglykol 2000 0,1 Mol Polyäthylenglykol 1000 und 0,1 Mol Polyäthylenglykol 3000.

Abwandlung 2

Man verwendet anstelle von 0,2 Mol Polyäthylenglykol 2000 0,15 Mol Polyäthylenglykol 1000 und 0,5 Mol Polyäthylenglykol 6000.

Abwandlung 3

Man verwendet anstelle von Isophthalsäure die äquivalente Menge Bernsteinsäureanhydrid.

Abwandlung 4

Man verwendet anstelle von 0,4 Mol Terephthalsäuredimethylester und 0,45 Mol Isophthalsäure 0,85 Mol Isophthalsäure-dimethylester.

Abwandlung 5

Man verwendet anstelle von 0,65 Mol Diäthylenglykol die äquivalente Menge Neopentylglykol.

Beispiel 2

a) Herstellung der Präparation

6,5 g des Aufhellers folgender Formel

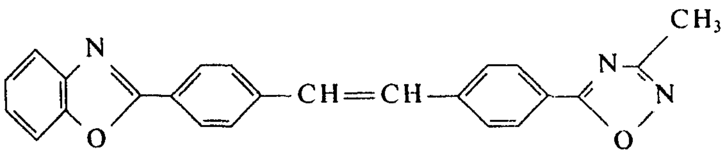

und 0,5 g des Aufhellers der Formel

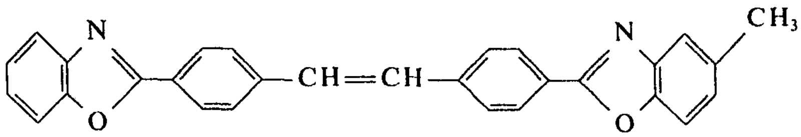

5 g einer 40%igen wäßrigen Lösung eines Phosphonsäureestergruppen enthaltenden Polyesters, dessen Herstellung nachfolgend unter c) beschrieben ist, und 11 g entsalztes Wasser werden mit 200 g Glasperlen (1 mm Durchmesser) in einer Rührwerkskugelmühle unter Wasserkühlung gemahlen. Nach ca. 6 bis 7 Stunden ist die geforderte Feinverteilung (90% der Teilchen besitzen eine Größe von $\leq 2 \mu m$) erreicht, und man setzt noch 45 g der 40%igen Lösung des wasserlöslichen Phosphonsäureestergruppen enthaltenden Polyesters und 32 g entsalztes Wasser zu, verrührt noch ca. ½ Stunde und siebt dann vom Mahlkörper ab.

b) Anwendung der Präparation

Färbt man wie in Beispiel 1 b) angegeben auf Polyester, so erhält man Weißeffekte, die 4 Weißgradeinheiten über der Vergleichsfärbung liegen.

c) Herstellung des Phosphonsäureestergruppen enthaltenden Polyesters

In einem 2-Liter-Schliffvierhalskolben mit Rührer, Thermometer, Gaseinleitungsrohr und absteigendem Kühler werden 234 g (= 0,5 Mol) des in Beispiel 1 c) formelmäßig angegebenen Handelsprodukts der Hoechst AG, Frankfurt am Main, 26,5 g Diäthylenglykol (0,25 Mol), 1000 g Polyäthylenglykol 2000 (0,5 Mol), 77,6 g Terephthalsäuredimethylester (0,4 Mol) und 8 g Titantetraisopropylat als Katalysator im Laufe einer Stunde unter Stickstoff und bei gutem Rühren auf 150°C geheizt. Die Temperatur wird dann stündlich um 10°C gesteigert, bis eine Innentemperatur von 200°C erreicht ist. Nun werden 66,4 g Isophthalsäure von 99%iger Reinheit (= 0,4 Mol) eingerührt und die Temperatur dann im Laufe von 2 Stunden gleichmäßig weiter bis 220°C gesteigert. Man heizt dann unter gutem Rühren 4 Stunden bei 220 bis 225°C, 2 Stunden bei 230 bis 235°C und 2 Stunden bei 240 bis 245°C. Bei letzterer Temperatur legt man dann noch 2 Stunden lang ein Vakuum von ca. 20 mbar an und zum Schluß noch 2 Stunden ein solches von 1 bis 3 mbar. Man erhält 1250 g einer hellen Schmelze, die mit Wasser und ca. 80 g 27%iger Natronlauge auf 3125 g zu einer 40%igen neutralen, farblosen, etwas viskosen Lösung verdünnt werden. Eine leichte Trübung kann durch Verrühren mit 1 bis 2% Kieselgur und Abpressen über ein Druckfilter leicht beseitigt werden. Das durchschnittliche, scheinbare Molekulargewicht dieses Polykondensats liegt bei 1400.

Beispiel 3

a) Herstellung der Präparation

7 g des optischen Aufhellers folgender Formel

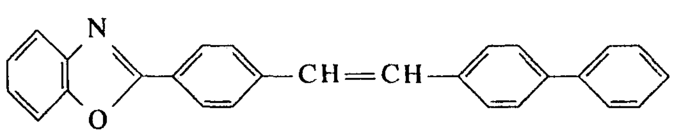

5 g einer 40%igen Lösung eines wasserlöslichen Phosphonsäureestergruppen enthaltenden Polyesters, dessen Herstellung nachfolgend unter c) beschrieben ist, und 11 g entsalztes Wasser werden, wie unter Beispiel 2 a) beschrieben, in einer Rührwerkskugelmühle vermahlen. Nach beendeter Mahlung setzt man noch 59,5 g der 40%igen Lösung des Phosphonsäureestergruppen enthaltenden Polyesters und 17,5 g entsalztes Wasser zu.

b) Anwendung der Präparation

Bei der Durchführung der Färbung und Vergleichsfärbung gemäß Beispiel 1 b) werden gleiche hohe Weißeffekte erhalten.

c) Herstellung des Phosphonsäureestergruppen enthaltenden Polyesters

In der Versuchsapparatur von Beispiel 1 c) werden 95,4 g Diäthylenglykol (= 0,9 Mol), 85 g Pluriol ® PE 4300 (BASF, auf Polypropylenglykol vom Molekulargewicht von ca. 1 100 wird Äthylenoxyd bis zum endgültigen Molekulargewicht von ca. 1700 aufgepfropft) (= 0,05 Mol), 97 g Terephthalsäuredimethylester (= 0,5 Mol) und 2 g Titantetraisopropylat im Laufe einer Stunde auf 150°C geheizt und im Laufe einer weiteren Stunde, immer unter Stickstoff und gutem Rühren auf 160°C, wobei Methanol abdestilliert. Nun werden 46 g (= 0,1 Mol) des in Beispiel 1 c) formelmäßig angegebenen Handelsprodukte der Hoechst AG, Frankfurt am Main, eingemischt und im Laufe von 2 Stunden bis 180°C weitergeheizt. Bei dieser Temperatur werden noch 83 g reine Isophthalsäure zugesetzt (= 0,5 Mol). Unter kräftigem Rühren wird dann die Temperatur im Laufe von 3 Stunden bis 210°C erhöht und 2 Stunden bei 210 bis 215°C gehalten. Anschließend wird ein Vakuum von ca. 20 mbar angelegt und weitere 2 Stunden bei dieser Temperatur gerührt. Zum Schluß wird noch 2 Stunden ein Vakuum von ca. 2 mbar angelegt. Man erhält als Rückstand 343 g helle Schmelze vom durchschnittlichen, scheinbaren Molekulargewicht von 2150, die sich mit destilliertem Wasser und ca. 25 g 27%iger Natronlauge leicht auf 858 g zu einer fast farblosen 40%igen Lösung vom pH = 6,5 bis 7 verdünnen läßt. Eine leichte Trübung läßt sich gegebenenfalls leicht beseitigen, wie in Beispiel 1 c) beschrieben.

## Beispiel 4

a) Herstellung der Präparation

7 g des optischen Aufhellers folgender Formel

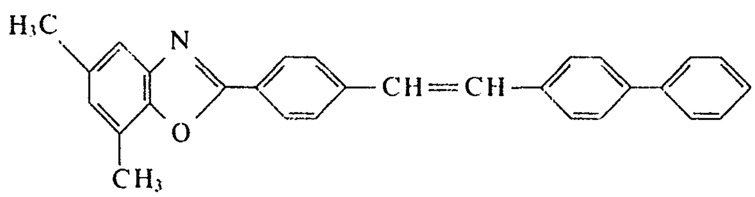

5 g einer 40%igen Lösung des in Beispiel 2 beschriebenen Phosphonsäureestergruppen enthaltenden wasserlöslichen Polyesters, 1 g einer 50%igen Lösung von Cocosfettdimethylbenzylammoniumchlorid und 22 g entsalzten Wassers werden in einer Rührwerkskugelmühle mit Glasperlen unter Wasserkühlung so lange gemahlen, bis die geforderte Feinverteilung erreicht ist. Danach setzt man noch 30 g der 40%igen Lösung obigen wasserlöslichen Polyesters und 5 g entsalztes Wasser zu, verrührt noch ca. 1 Stunde und trennt dann vom Mahlkörper ab. Man erhält 70 g einer Aufhellerpräparation, die 10% Aufhellerwirksubstanz und 20% des Phosphonsäureestergruppen enthaltenden wasserlöslichen Polyesters enthält.

b) Anwendung der Präparation

Unter Verwendung der erhaltenen Präparation wurden Färbeflotten hergestellt, die 0,5 g und 1,0 g Aufhellerwirksubstanz im Liter enthielten. In ihnen werden Polyestergewebe nach dem Klotz-Thermosolverfahren gefärbt, wobei 30 sec. bei 190°C thermosoliert wurde. Zum Vergleich wurden Färbungen unter vergleichbaren Bedingungen mit einer Handelsdispersion derselben Aufheller-Wirksubstanz hergestellt. Es wurden folgende Ergebnisse erhalten:

| | Wirksubstanzgehalt der Flotte | | | |
|---|---|---|---|---|
| | 0,5 g/l | | 1 g/l | |
| | $W_B$ | $W_S$ | $W_B$ | $W_S$ |
| Handelsdispersion | 156 | 154 | 164 | 158 |
| Erfindungsgemäße Präparation | 163 | 159 | 170 | 164 |

Beispiel 5

Verwendet man anstelle der Aufhellerwirksubstanz aus Beispiel 4 folgenden optischen Aufheller

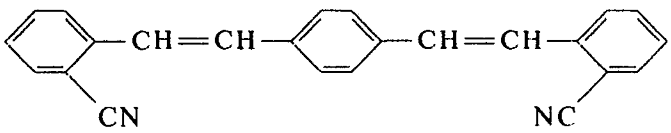

arbeitet sonst wie in Beispiel 4 angegeben, so erhält man eine Präparation, die gegenüber einer Handelsdispersion desselben optischen Aufhellers folgende Weißeffekte beim Klotz-Thermosolverfahren 30 sec./190°C liefert.

| | Wirksubstanzgehalt der Flotte | | | |
|---|---|---|---|---|
| | 0,5 g/l | | 1,0 g/l | |
| | $W_B$ | $W_S$ | $W_B$ | $W_S$ |
| Handelsdispersion | 160 | 158 | 163 | 160 |
| Erfindungsgemäße Präparation | 166 | 159 | 168 | 162 |

Beispiel 6

a) Herstellung der Präparation

Eine Aufschlämmung aus 7 g der Aufhellerwirksubstanz aus Beispiel 1, 5 g einer 40%igen Lösung des nachstehend beschriebenen Phosphonsäureestergruppen enthaltenden Polyesters und 15 g entsalztes Wasser werden in einer Rührwerkskugelmühle unter Wasserkühlung solange gemahlen, bis die geforderte Feinverteilung erreicht ist (vgl. Beispiel 2 a). Man setzt noch 45 g der 40%igen Lösung des Polyesters und 28 g entsalztes Wasser zu, verrührt noch ca ½ Stunde und trennt dann vom Mahlkörper ab.

b) Mit der hergestellten Präparation wurden, wie in Beispiel 1 b) angegeben, Färbungen und Vergleichsfärbungen hergestellt

Dabei wurden folgende Ergebnisse erhalten:

| | Wirksubstanzgehalt der Flotte | | | |
|---|---|---|---|---|
| | 0,5 g/l | | 1,0 g/l | |
| | $W_B$ | $W_S$ | $W_B$ | $W_S$ |
| Vergleich | 158 | 158 | 165 | 161 |
| Erfindungsgemäße Präparation | 165 | 161 | 171 | 166 |

c) Herstellung des Phosphonsäureestergruppen enthaltenden Polyesters

In der Versuchsapparatur von Beispiel 1 c werden 152,1 g des in Beispiel 1 c formelmäßig angegebenen Handelsprodukts der Hoechst AG, Frankfurt am Main, 39,2 g Diäthylenglykol, 200 g Polyäthylenglykol 2000, 38,8 g Dimethylterephthalat und 2 g Titantetraisopropylat als Katalysator im Laufe einer Stunde unter Stickstoff auf 150°C und im Laufe weiterer 5 Stunden auf 200°C geheizt. Dann wird unter Vermeidung von Luftzutritt 33,2 g Isophthalsäure 99%ig eingerührt und die Temperatur im Kolben im Laufe von 3 Stunden bis 220°C gesteigert. Man rührt dann noch 2 Stunden unter einem Vakuum von 10

bis 20 mbar bei 220 bis 225°C und weitere 2 Stunden unter einem Feinvakuum von 1 bis 4 mbar. Als Rückstand werden 321 g helle Schmelze vom durchschnittlichen, scheinbaren Molekulargewicht von 1560 erhalten, die noch warm bei ca. 90°C mit warmem Wasser und ca. 70 g 27%iger Natronlauge verdünnt und neutralisiert werden, bis zu einer Gesamtausbeute von 803 g, entsprechend einer 40%igen, hellen, etwas viskosen Lösung.

Geeignete Polyester werden auch erhalten, wenn bei dem vorstehenden Beispiel das Dimethylterephthalat ersetzt wird durch eine äquivalente Menge Adipinsäuredimethylester oder Bernsteinsäuredimethylester oder Cyclohexan-1,4-dicarbonsäure-di-n-propylester oder Naphthalin-1,4-dicarbonsäuredimethylester oder Itaconsäure-di-methylester.

## Beispiel 7

Verwendet man anstelle des in Beispiel 2 angegebenen wasserlöslichen Polyesters die nachfolgend beschriebenen, so erhält man ähnlich gute Weißeffekte.

a) In der Apparatur von Beispiel 1 c werden unter Stickstoff 23,4 g des in Beispiel 1 c formelmäßig angegebenen Handelsprodukts der Hoechst AG, 34,5 g Diäthylenglykol, 300 g Polyäthylenglykol 2000 und 43,65 g Terephthalsäuredimethylester mit 1 g Titanpropylat als Katalysator eine Stunde auf 150°C geheizt und die Temperatur anschließend im Laufe von 5 Stunden allmählich bis 200°C erhöht. Dann werden 41,5 g reine Isophthalsäure nachgesetzt. Die Reaktionstemperatur wird im Laufe von 2 Stunden auf 220°C gesteigert, 2 Stunden bei 220 bis 225°C gehalten und dann bei dieser Temperatur noch je eine Stunde ein Vakuum von zunächst ca. 16 mbar, dann von ca. 1,3 mbar angelegt. Man erhält 410 g helle Schmelze, die man bis 90°C abkühlen läßt und dann mit 50°C warmen Wasser und ca. 5 g 27%iger Natronlauge auf 1025 g zu einer neutralen, etwas viskosen 40%igen Lösung verdünnt. Scheinbares mittleres Molekulargewicht 1500.

b) In der Versuchsapparatur von Beispiel 1 c werden unter Stickstoff 53 g Diäthylenglykol (0,5 Mol), 300 g Polyäthylenglykol 2000 (0,15 Mol), 29 g Terephthalsäure-dimethylester (0,15 Mol) und 1 g Titantetraisopropylat im Laufe einer Stunde auf 150°C geheizt. Die Kondensationstemperatur wird im Laufe von 5 Stunden bis 200°C gesteigert. Es wird jetzt weiter unter Stickstoff 24,9 g reine Isophthalsäure (0,15 Mol) nachgesetzt und die Temperatur im Laufe von 3 Stunden bis 220°C gesteigert. Man läßt den Kolbeninhalt nun wieder auf 180°C abkühlen und tropft erst jetzt 33 g Dimethylphosphat (0,3 Mol) zu. Es wird noch 2 Stunden unter Stickstoff bei 220 bis 225°C verrührt, dann 1 Stunde bei der gleichen Temperatur in einem Vakuum von ca. 20 mbar und schließlich noch 1 Stunde im Feinvakuum von ca. 1,3 mbar. Als Rückstand erhält man 395 g helle Schmelze, die sich mit Wasser und ca. 45 g 27%iger Natronlauge leicht zu einer neutralen, etwas viskosen 40%igen Lösung verdünnen lassen.

Mittleres scheinbares Molekulargewicht 2100.

Ausbeute = 988 g.

## Beispiel 8

Ähnlich hohe Weißeffekte wie in Beispiel 1 speziell im Klotz-Thermosolverfahren erhält man mit den beiden wasserlöslichen Polyestern, deren Herstellung nachfolgend beschrieben ist:

a) In der gleichen Versuchsapparatur wie in Beispiel 1 c werden 26,5 g Diäthylenglykol (0,25 Mol), 15,6 g Neopentylglykol (0,2 Mol), 400 g Polyäthylenglykol 2000 (0,2 Mol), 29,1 g Terephthalsäuredimethylester (0,15 Mol) und 2 g Titantetraisobutylat als Katalysator im Laufe einer Stunde bis 150°C, im Laufe weiterer 3 Stunden bis 180°C geheizt. Dann werden unter Luftausschluß 60,8 g Propanphosphonsäure-dimethylester eingerührt (0,4 Mol) und die Temperatur im Kolben im Laufe zweier Stunden bis 200°C gesteigert. Nun wird noch 24,9 g Isophthalsäure 99%ig dazugemischt und die Reaktionstemperatur im Laufe zweier Stunden bis 215°C erhöht. Man hält 3 Stunden bei 210 bis 215°C, legt dann bei dieser Temperatur zunächst für 1 Stunde ein Vakuum von 10 bis 20 mbar, dann für 2 Stunden ein solches von 1 bis 4 mbar an. Als Rückstand verbleiben 508 g helle Schmelze, die mit Wasser und etwa 20 g 27%iger Natronlauge auf 1270 g verdünnt und gleichzeitig neutralisiert werden. Helle, etwas viskose 40%ige Lösung. Mittleres, scheinbares Molekulargewicht 1900.

Geeignete Polyester mit etwas abgewandelten Eigenschaften erhält man, wenn bei dem vorstehenden Verfahren die 0,4 Mol Propanphosphonsäuredimethylester ersetzt werden durch:

0,3 Mol Methanphosphonsäure-diäthylester,
0,25 Mol Dodecanphosphonsäure-dimethylester,

0,25 Mol Phenylmethanphosphonsäure-dimethylester,
0,2 Mol $C_6H_5CH_2OCH_2CH_2PO(OCH_3)_2$
0,25 Mol Cyclohexanphosphonsäure-di-n-propylester,
0,2 Mol Naphthalin-2-phosphonsäure-dimethylester.

b) In der im Beispiel 1 c verwendeten Apparatur werden 16 g Diäthylenglykol (0,15 Mol), 400 g Polyäthylenglykol 2000 (0,2 Mol), 34 g Terephthalsäuredimethylester (0,175 Mol), 34 g Isophthalsäuredimethylester (0,175 Mol) und 1 g Titanacetylacetonat als Katalysator im Laufe einer Stunde unter Stickstoff auf 150°C geheizt. Die Temperatur wird im Laufe von 3 Stunden bis 180°C gesteigert und dann unter Luftausschluß 45 g 2-Oxo-2-propyl-1,3,2-dioxa-phospholan (0,3 Mol) nachgesetzt. Die Temperatur wird im Laufe von 5 Stunden bis 240°C gesteigert, dann bei dieser Temperatur 1 Stunde lang das Vakuum einer Wasserstrahllampe (ca. 16 mbar) und 1 Stunde das Vakuum einer Ölpumpe (ca. 1,3 mbar) angelegt. Man erhält als Rückstand 493 g helle Schmelze, die mit Wasser und ca. 20 g 27%iger Natronlauge auf 1233 g zu einer neutralen, etwas viskosen 40%igen Lösung verdünnt wird. Mittleres, scheinbares Molekulargewicht = 1660.

Beispiel 9

a) Herstellung der Präparation

Die Präparation wird, wie in Beispiel 1 a angegeben, hergestellt, wobei 7% der in Beispiel 1 a genannten Wirksubstanz und 20% eines wasserlöslichen Phosphonsäureestergruppen enthaltenden Polyesters, dessen Herstellung nachfolgend beschrieben ist, eingesetzt werden.
Die erhaltene Aufhellerpräparation liefert speziell auch im HT-Verfahren hohe Weißeffekte.

b) Anwendung der Präparation

Für die Vergleichsfärbung stellt man sich, wie in Beispiel 1 b angegeben, unter Verwendung von Dimethylformamid eine Dispersion des optischen Aufhellers her.

Ausfärbung nach dem HT-Verfahren

Gewebeabschnitte aus Polyester-Filament werden in üblicher Weise vorgewaschen und anschließend in einem Linitest-Gerät 45 Minuten lang bei 120°C mit einer Färbeflotte behandelt, die 0,04% Wirksubstanz enthält. Dann wird in üblicher Weise fertiggestellt. Es werden folgende Ergebnisse erhalten:

| | $W_B$ | $W_S$ |
|---|---|---|
| Vergleich | 159 | 158 |
| Erfindungsgemäße Präparation | 163 | 160 |

Beispiel 10

a) Herstellung der Präparation

Die Präparation wird, wie in Beispiel 1 a angegeben, hergestellt, wobei 7% der in Beispiel 1 a genannten Wirksubstanz und 20% eines wasserlöslichen Phosphonsäureestergruppen enthaltenden Polyesters, dessen Herstellung nachfolgend beschrieben ist, eingesetzt werden.
Die erhaltene Aufhellerpräparation liefert speziell auch im HT-Verfahren hohe Weißeffekte.

b) Anwendung der Präparation

Für die Vergleichsfärbung stellt man sich, wie in Beispiel 1 b angegeben, unter Verwendung von Dimethylformamid eine Dispersion des optischen Aufhellers her.

Ausfärbung nach dem HT-Verfahren

Gewebeabschnitte aus Polyester-Filament werden in üblicher Weise vorgewaschen und anschließend in einem Linitest-Gerät 45 Minuten lang bei 120°C mit einer Färbeflotte behandelt, die 0,04%

Wirksubstanz enthält. Dann wird in üblicher Weise fertiggestellt. Es werden folgende Ergebnisse erhalten:

| | $W_B$ | $W_S$ |
|---|---|---|
| Vergleich | 159 | 158 |
| Erfindungsgemäße Präparation | 161 | 159 |

c) Herstellung des Phosphonsäureestergruppen enthaltenden Polyesters

In der Versuchsapparatur von Beispiel 1 c werden 34,5 g Diäthylenglykol (0,325 Mol), 50 g Polyäthylenglykol 1000 (0,05 Mol), 150 g Polyäthylenglykol 3000 (0,05 Mol), 38,8 g Terephthalsäure-dimethylester (0,2 Mol) und 1 g Titanisopropylat als Katalysator unter Stickstoff im Laufe einer Stunde auf 150°C geheizt und anschließend im Laufe von 2 Stunden weiter bis 170°C. Dann wird 70,2 g (0,15 Mol) des in Beispiel 1 c formelmäßig angegebenen Handelsprodukts der Hoechst AG, Frankfurt am Main, nachgesetzt und die Temperatur im Kolben im Laufe von 2 Stunden bis 200°C erhöht. Bei dieser Temperatur werden 37,4 g reine Isophthalsäure nachgesetzt und die Temperatur innerhalb von 5 Stunden auf 230°C gesteigert. Bei dieser Temperatur wird dann noch 2 Stunden ein Vakuum von 10 bis 20 mbar angelegt und eine weitere Stunde ein Vakuum von 1 bis 4 mbar. Als Rückstand werden 329 g helle Schmelze mit einem mittleren, scheinbaren Molekulargewicht von 1990 erhalten, die mit Wasser und ca. 35 g 27%iger Natronlauge auf 823 g zu einer neutralen 40%igen, etwas viskosen Lösung verdünnt werden.

Die Eigenschaften des Polyesters können modifiziert werden, wenn anstelle der Isophthalsäure eine äquivalente Menge Glutarsäure oder Cyclohexan-1,3-dicarbonsäure oder Korksäure oder 2,5-Naphthalindicarbonsäure oder Sebazinsäure oder 3-Carboxyphenylessigsäure oder

$$HOOC—CH_2CH_2O—1{,}4—C_6H_4—OCH_2CH_2COOH$$

eingesetzt wird.

**Patentansprüche**

1. Präparation zum Aufhellen von Synthesefasern oder Gemischen von Synthese- und natürlichen Fasern, bestehend aus einer wäßrigen, Dispergiermittel und gegebenenfalls weitere übliche Zusätze enthaltenden Dispersion eines feinverteilten optischen Aufhellers oder mehrerer feinverteilter optischer Aufheller, dadurch gekennzeichnet, daß das Dispergiermittel ein in Wasser löslicher oder dispergierbarer Phosphonsäureestergruppen enthaltender Polyester ist.

2. Präparation nach Anspruch 1, dadurch gekennzeichnet, daß sie 4 bis 30 Gew.-% eines optischen Aufhellers oder mehrerer optischer Aufheller und 5 bis 50 Gew.-%, vorzugsweise 15 bis 25 Gew.-% des Phosphonsäureestergruppen enthaltenden Polyesters enthält.

3. Präparation nach den Ansprüchen 1 oder 2, dadurch gekennzeichnet, daß der Polyester ein scheinbares mittleres Molekulargewicht von 800 bis 5000, vorzugsweise 1000 bis 3000, besitzt und mindestens zu 5%, vorzugsweise zu 20 bis 50% aus Kettengliedern besteht, die eine oder mehrere Phosphonsäureestergruppen der Formel I

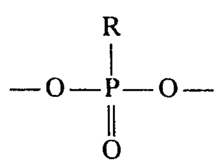

enthalten, worin R Wasserstoff, einen aliphatischen, cycloaliphatischen, aromatischen oder araliphatischen Rest bedeutet und der aliphatische Rest sowie der aliphatische Teil des araliphatischen Rests auch durch Sauerstoff ein- oder mehrfach unterbrochen sein kann.

4. Präparation nach Anspruch 3, dadurch gekennzeichnet, daß R Wasserstoff oder einen aliphatischen Rest mit 1 bis 22 C-Atomen, der auch durch Sauerstoff ein- oder mehrfach unterbrochen sein kann, einen cycloaliphatischen Rest mit 5 bis 8 C-Atomen, Phenyl, Naphthyl, wobei der Phenyl- oder Naphthylrest durch bis zu 3 Alkylreste mit je 1 bis 6 C-Atomen substituiert sein kann, einen durch Phenyl substituierten aliphatischen Rest mit 1 bis 12 C-Atomen im aliphatischen Rest, der auch durch

Sauerstoff ein- oder mehrfach unterbrochen sein kann, bedeutet.

5. Präparation nach den Ansprüchen 1 bis 4, dadurch gekennzeichnet, daß der Polyester Kettenglieder der allgemeinen Formel III:

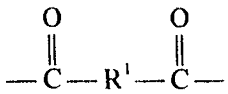

und/oder der allgemeinen Formel VII:

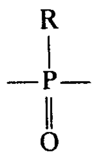

und/oder der allgemeinen Formel X:

$$-O-R^4-O-$$

und/oder der allgemeinen Formel XIII a:

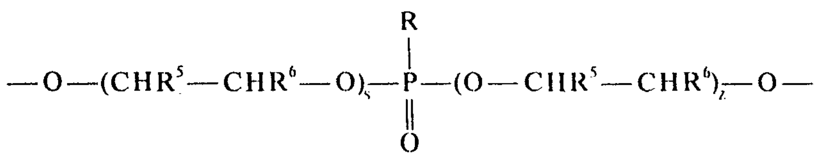

und/oder der allgemeinen Formel XIV a:

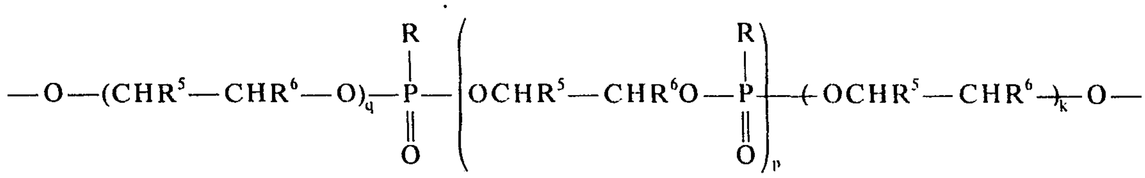

und/oder der allgemeinen Formel XVI:

$$-O-R^7-CO-$$

und/oder der allgemeinen Formel XIX a:

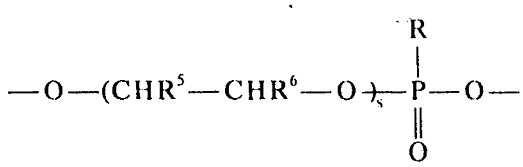

und/oder der allgemeine Formel XX a:

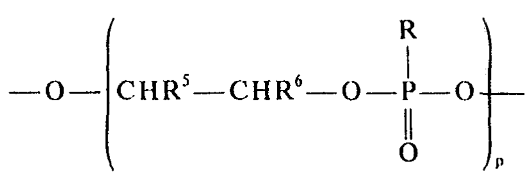

enthält, worin

$R^1$ eine direkte Bindung oder einen divalenten aliphatischen, cycloaliphatischen, aromatischen oder araliphatischen Rest darstellt, dessen Kohlenstoffgerüst auch durch Heteroatome, insbesondere Sauerstoff oder Schwefel, oder Heterogruppen, insbesondere $-SO_2-$, ein- oder mehrfach unterbrochen sein kann,

R die in Anspruch 3, vorzugsweise Anspruch 4, angegebene Bedeutung besitzt,

$R^4$ einen divalenten aliphatischen, cycloaliphatischen oder araliphatischen Rest, dessen Kohlenstoffgerüst auch durch Sauerstoff und/oder aromatische Kerne, insbesondere Phenylen oder Naphthylen und/oder $-C_6H_5-SO_2-C_6H_5$-Reste ein- oder mehrfach unterbrochen sein kann,

$R^5$, $R^6$ Wasserstoff, Methyl oder Äthyl,

$R^7$ einen divalenten aliphatischen, cycloaliphatischen oder araliphatischen Rest, dessen Kohlenstoffgerüst auch durch Heteroatome, insbesondere Sauerstoff ein- oder mehrfach unterbrochen sein kann,

s, z eine Zahl von 1 bis 20,

p eine Zahl von 1 bis 10,

q, k die Zahl 0, 1, 2 oder 3

bedeuten.

6. Präparation nach den Ansprüchen 1 bis 5, dadurch gekennzeichnet, daß sie als wasserunlösliche oder in Wasser schwer lösliche optische Aufheller Derivate von Mono- und Bisbenzoxazolen, Pyrenen, Bis-äthylenarylen, Aryltriazolen, Naphthoxazolen, Benzo- oder Naphthofuranen, Cumarinen, Naphthalimiden und Pyrazolinen oder deren Mischungen enthält.

7. Präparation nach den Ansprüchen 1 bis 6, dadurch gekennzeichnet, daß der Polyester Kettenglieder der allgemeinen Formel III:

$$-\overset{\overset{O}{\|}}{C}-R^1-\overset{\overset{O}{\|}}{C}$$

und/oder der allgemeinen Formel X:

$$-O-R^4-O-$$

und/oder der allgemeinen Formel XIII a:

$$-O-(CHR^5-CHR^6O)_s-\underset{\underset{O}{\|}}{\overset{\overset{R}{|}}{P}}-(OCHR^5-CHR^6)_z-O-$$

und/oder der allgemeinen Formel XIV a:

$$-O-(CHR^5-CHR^6O)_q-\underset{\underset{O}{\|}}{\overset{\overset{R}{|}}{P}}-\left(OCHR^5-CHR^6O-\underset{\underset{O}{\|}}{\overset{\overset{R}{|}}{P}}\right)_p-(OCHR^5-CHR^6)_k-O-$$

enthält.

8. Präparation nach den Ansprüchen 1 bis 7, dadurch gekennzeichnet, daß $R^1$

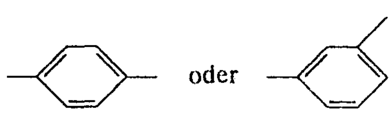

bedeutet.

9. Präparation nach den Ansprüchen 1 bis 8, dadurch gekennzeichnet, daß $R^4$

$$-CH_2CH_2-(OCH_2CH_2)_r-$$

ist, wobei r eine Zahl von 1 bis 230, vorzugsweise 1 oder 40 bis 53 bedeutet.

10. Präparation nach den Ansprüchen 1 bis 9, dadurch gekennzeichnet, daß der Polyester Kettenglieder der allgemeinen Formel

$$-O-CH_2CH_2O-\underset{\underset{O}{\|}}{\overset{\overset{R}{|}}{P}}-\left(OCH_2CH_2O-\underset{\underset{O}{\|}}{\overset{\overset{R}{|}}{P}}\right)_p-O-CH_2CH_2-O-$$

enthält, worin R Alkyl mit 1 bis 4 C-Atomen, vorzugsweise n-Propyl und p = 1 bis 2 bedeutet.

11. Präparation nach den Ansprüchen 1 bis 9, dadurch gekennzeichnet, daß der Polyester folgende Kettenglieder enthält:

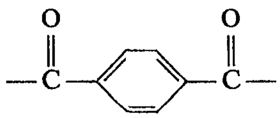 und/oder 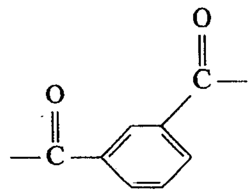

$$—OCH_2CH_2—O—CH_2CH_2O—$$

und/oder

$$—OCH_2CH_2—(OCH_2CH_2)_r—O—$$

und

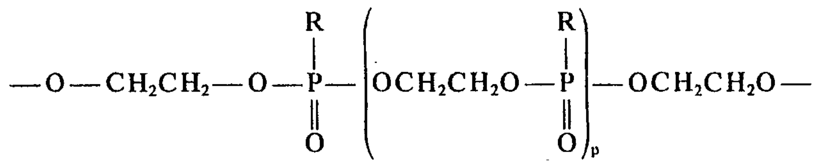

worin r eine Zahl von 40 bis 53 und p = 1 bis 2 ist.

12. Verfahren zur Herstellung einer Präparation nach den Ansprüchen 1 bis 11, dadurch gekennzeichnet, daß optische Aufheller, wasserlöslicher oder in Wasser dispergierbarer Phosphonsäureestergruppen enthaltender Polyester, Wasser und eventuell weitere Zusätze solange einem Naßmahlprozeß unterworfen werden, bis 90% aller Teilchen des optischen Aufhellers eine Größe von 2 μm oder kleiner erreicht haben.

13. Verfahren nach Anspruch 12, dadurch gekennzeichnet, daß für den Naßmahlprozeß zunächst nur 3 bis 15 Gew.-% der Gesamtmenge des Phosphonsäureestergruppen enthaltenden Polyesters verwendet werden und der restliche Polyesteranteil nach Beendigung des Naßmahlprozesses gegebenenfalls zusammen mit weiteren Hilfsmitteln und Wasser zugemischt wird.

14. Verfahren zum optischen Aufhellen von Materialien aus Synthesefasern bzw. Mischungen von Synthese- und natürlichen Fasern, dadurch gekennzeichnet, daß das Material mit einer Flotte imprägniert wird, die eine Präparation nach den Ansprüchen 1 bis 11 enthält, dann abgequetscht, gegebenenfalls zwischengetrocknet und dann thermosoliert wird.

**Claims**

1. Formulation for brightening synthetic fibres or mixtures of synthetic fibres and natural fibres, which consists of an aqueous dispersion, containing dispersing agent and if appropriate other customary additives, of a finely divided optical brightener or of several finely divided optical brighteners, characterised in that the dispersing agent is a water-soluble or water-dispersible polyester containing phosphonic acid ester groups.

2. Formulation according to Claim 1, characterised in that it contains 4 to 30% by weight of an optical brightener or of several optical brighteners and 5 to 50% by weight, preferably 15 to 25% by weight, of the polyester containing phosphonic acid ester groups.

3. Formulation according to Claim 1 or 2, characterised in that the polyester has an apparent average molecular weight of 800 to 5000, preferably 1000 to 3000, and consists to the extent of at least 5%, preferably to the extent of 20 to 50%, of chain members which contain one or more phosphonic acid ester groups of the formula I

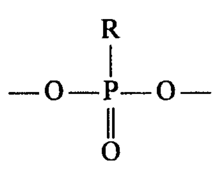

wherein R denotes hydrogen or an aliphatic, cycloaliphatic, aromatic or araliphatic radical and the aliphatic radical and the aliphatic part of the araliphatic radical can also be interrupted by one or more oxygen atoms.

4. Formulation according to Claim 3, characterised in that R denotes hydrogen, an aliphatic radical with 1 to 22 C atoms, which can also be interrupted by one or more oxygen atoms, a cycloaliphatic radical with 5 to 8 C atoms, phenyl or naphthyl, it also being possible for the phenyl or naphthyl radical to be substituted by up to 3 alkyl radicals with in each case 1 to 6 C atoms, or an aliphatic radical which is substituted by phenyl and has 1 to 12 C atoms in the aliphatic radical and can also be interrupted by one or more oxygen atoms.

5. Formulation according to Claims 1 to 4, characterised in that the polyester contains chain members of the general formula III:

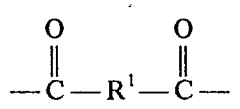

and/or of the general formula VII:

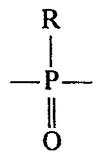

and/or of the general formula X:

$$—O—R^4—O$$

and/or of the general formula XIII a:

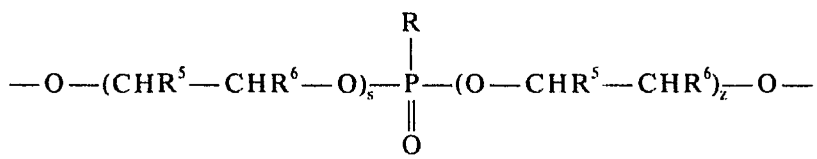

and/or of the general formula XIV a:

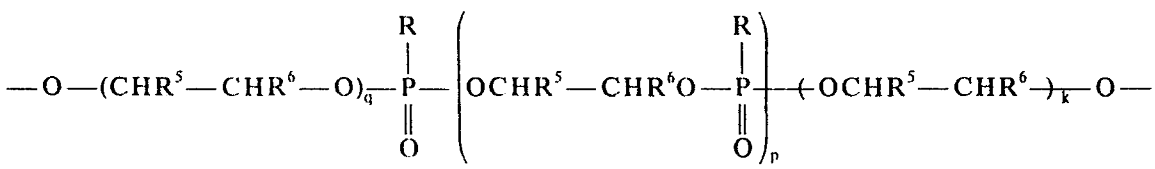

and/or of the general formula XVI:

$$—O—R^7—CO—$$

and/or of the general formula XIX a:

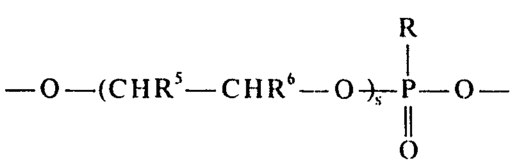

and/or of the general formula XX a:

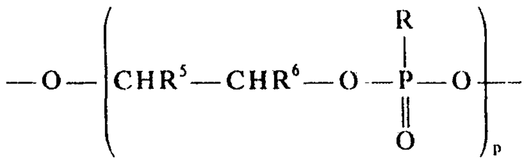

wherein

$R^1$ represents a direct bond or a divalent aliphatic, cycloaliphatic, aromatic or araliphatic radical, the carbon skeleton of which can also be interrupted by one or more hetero-atoms, in particular oxygen or sulphur, or hetero-groups, in particular $-SO_2-$,
R has the meaning given in Claim 3, but preferably that given in Claim 4,
$R^4$ denotes a divalent aliphatic, cycloaliphatic or araliphatic radical, the carbon skeleton of which can also be interrupted by one or more oxygen atoms and/or aromatic nuclei, in particular phenylene or naphthylene, and/or $-C_6H_5-SO_2-C_6H_5-$ radicals,
$R^5$ and $R^6$ denote hydrogen, methyl or ethyl,
$R^7$ denotes a divalent aliphatic, cycloaliphatic or araliphatic radical, the carbon skeleton of which can also be interrupted by one or more hetero-atoms, in particular oxygen,
s and z denote a number from 1 to 20,
p denotes a number from 1 to 10 and
q and k denote the number 0, 1, 2 or 3.

6. Formulation according to Claims 1 to 5, characterised in that it contains, as optical brighteners which are insoluble in water or sparingly soluble in water, derivatives of mono- and bis-benzoxazoles, pyrenes, bis-ethylene-aryls, aryltriazoles, naphthoxazoles, benzo- or naphtho-furanes, coumarins, naphthalimides and pyrazolines, or mixtures there of.

7. Formulation according to Claims 1 to 6, characterised in that the polyester contains chain members of the general formula III:

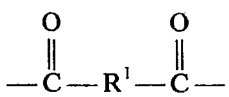

and/or of the general formula X:

$$—O—R^4—O$$

and/or of the general formula XIII a:

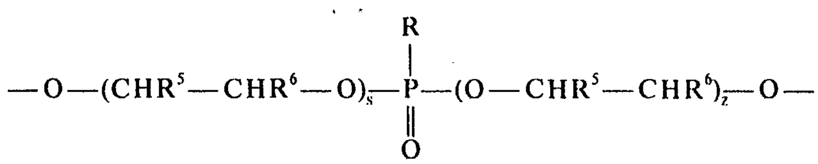

and/or of the general formula XIV a:

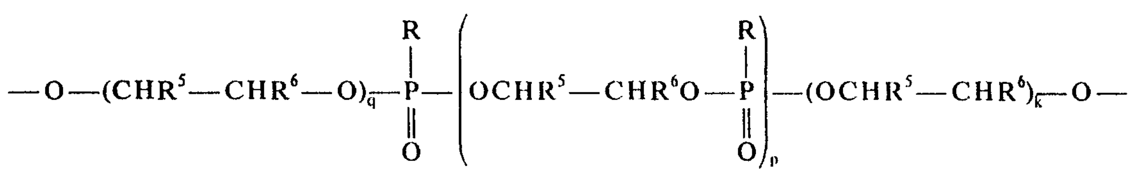

8. Formulation according to Claims 1 to 7, characterised in that $R^1$ denotes

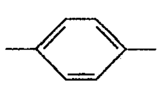 or 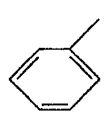

9. Formulation according to Claims 1 to 8, characterised in that $R^4$ denotes

$$—CH_2CH_2—(OCH_2CH_2)_r—$$

wherein r ist a number from 1 to 230, preferably 1 or 40 to 53.

10. Formulation according to Claims 1 to 9, characterised in that the polyester contains chain members of the general formula

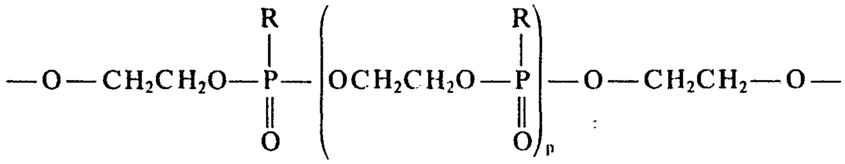

wherein R denotes alkyl having 1 to 4 C atoms, preferably n-propyl, and p denotes 1 or 2.

11. Formulation according to Claims 1 to 9, characterised in that the polyester contains the following chain members:

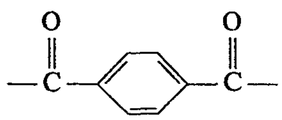 and/or 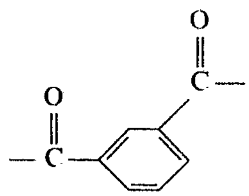

$$—OCH_2CH_2—O—CH_2CH_2O—$$

and/or

$$—OCH_2CH_2—(OCH_2CHG_2)_r—O—$$

and

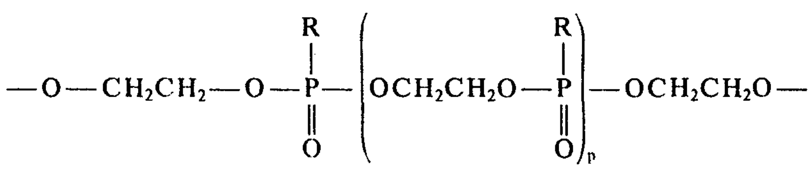

wherein r is a number from 40 to 53 and p is 1 or 2.

12. Process for the preparation of a formulation according to Claims 1 to 11, characterised in that optical brighteners, a water-soluble or water-dispersible polyester containing phosphonic acid ester groups, water and, if appropriate, other additives are subjected to a wet grinding process until 90% of all the particles of the optical brightener have achieved a size of 2 μm or less.

13. Process according to Claim 12, characterised in that initially only 3 to 15% by weight of the total amount of polyester containing phosphonic acid ester groups are used for the wet grinding process and the remaining portion of the polyester is admixed, optionally together with other auxiliaries and water, when the wet grinding process has ended.

14. Process for the optical brightening of materials of synthetic fibres or mixtures of synthetic fibres and natural fibres, characterised in that the material is impregnated with a liquor which contains a formulation according to Claims 1 to 11, and is then squeezed off, if appropriate intermediately dried, and then subjected to the thermosol process.

**Revendications**

1. Composition pour l'azurage de fibres synthétiques ou de mélanges de fibres synthétiques avec de fibres naturelles, constituée d'une dispersion aqueuse d'un azureur optique finement divisé ou de plusieurs azureurs optiques finement divisés, dispersion qui contient un dispersant et éventuellement d'autres additifs usuels, ladite composition étant caractérisée en ce que le dispersant est un polyester, soluble ou dispersable dans l'eau, contenant des radicaux d'esters phosphoniques.

2. Composition selon la revendication 1, caractérisée en ce qu'elle contient de 4 à 30% en poids d'un

azureur optique, ou de plusieurs azureurs optiques, et de 5 à 50% en poids, de préférence de 15 à 25% en poids, du polyester contenant des radicaux d'esters phosphoniques.

3. Composition selon l'une des revendications 1 et 2, caractérisée en ce que le polyester a une masse moléculaire moyenne apparente de 800 à 5000, de préférence de 1000 à 3000, et est constitué pour au moins 5%, de préférence pour 20 à 50%, de maillons caténaires contenant un ou plusieurs radicaux d'esters phosphoniques répondant à la formule I:

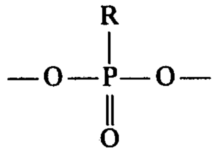

(I)

dans laquelle R représente l'hydrogène ou un radical aliphatique, cycloaliphatique, aromatique ou araliphatique, le radical aliphatique ainsi que la partie aliphatique d'un radical araliphatique pouvant également être interrompus une ou plusieurs fois par un atome d'oxygène.

4. Composition selon la revendication 3, caractérisée en ce que R représente:

- l'hydrogène ou
- un radical aliphatique qui contient de 1 à 22 atomes de carbone et qui peut également être interrompu, une ou plusieurs fois, par un atome d'oxygène, ou
- un radical cycloaliphatique contenant de 5 à 8 atomes de carbone,
- un radical phényle ou un radical naphtyle, chacun d'eux pouvant porter au plus 3 radicaux alkyles contenant chacun de 1 à 6 atomes de carbone, ou
- un radical aliphatique porteur d'un phényle et contenant de 1 à 12 atomes de carbone dans sa partie aliphatique, ce radical aliphatique pouvant également être interrompu, une ou plusieurs fois, par un atome d'oxygène.

5. Composition selon l'une quelconque des revendications 1 à 4, caractérisée en ce que le polyester contient des maillons caténaires répondant à la formule générale III:

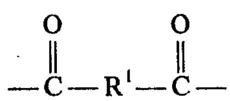

(III)

et/ou à la formule générale VII:

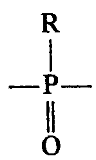

(VII)

et/ou à la formule générale X:

$$—O—R^4—O— \qquad (X)$$

et/ou à la formule générale XIII a:

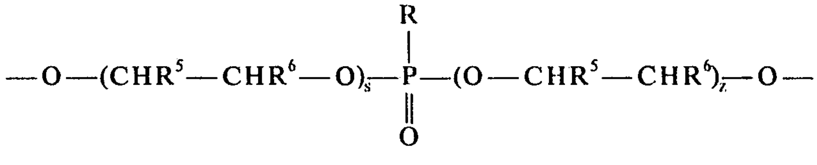

(XIII a)

et/ou à la formule générale XIV a:

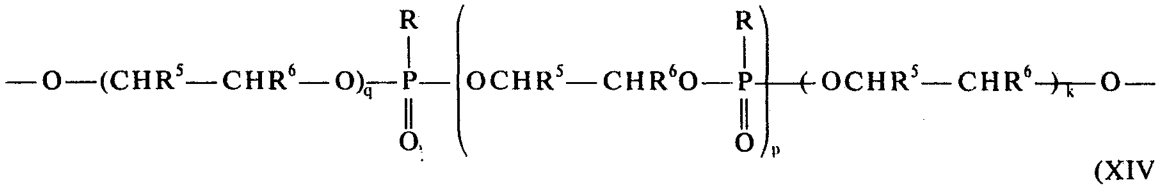

(XIV a)

et/ou à la formule générale XVI:

$$—O—R^7—CO— \qquad (XVI)$$

et/ou à la formule générale XIX a:

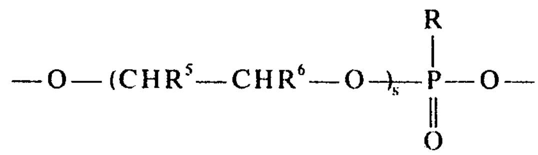

(XIX a)

et/ou á la formule générale XX a:

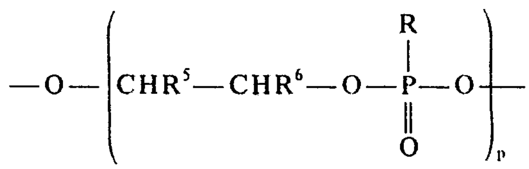

(XX a)

formules dans lesquelles:

$R^1$ représente une liaison directe ou un radical divalent aliphatique, cycloaliphatique, aromatique ou araliphatique, dont le squelette carboné peut également être interrompu, une ou plusieurs fois, par des hétéro-atomes, plus particuliérement par des atomes d'oxygène ou de soufre, ou par des radicaux à hétéro-atomes, plus particulièrement par $-SO_2-$,

R a la signification donnée à la revendication 3 ou, mieux, à la revendication 4,

$R^4$ représente un radical divalent aliphatique, cycloaliphatique ou araliphatique, dont le squelette carboné peut également être interrompu, une ou plusieurs fois, par un atome d'oxygène et/ou un noyau aromatique, plus particulièrement par un radical phénylène ou naphtylène et/ou un radical $-C_6H_5-SO_2-C_6H_5-$,

$R^5$ et $R^6$ représentent chacun un atome d'hydrogène ou un radical méthyle ou éthyle,

$R^7$ représente un radical divalent aliphatique, cycloaliphatique ou araliphatique, dont le squelette carboné peut également être interrompu, une ou plusieurs fois, par un hétéro-atome, plus particulièrement un atome d'oxygène,

s et z représentent chacun un nombre de 1 à 20,

p représente un nombre de 1 à 10 et

q et k représentent chacun l'un des nombres 0, 1, 2 et 3.

6. Composition selon l'une quelconque des revendications 1 à 5, caractérisée en ce qu'elle contient, comme azureurs optiques insolubles dans l'eau ou peu solubles dans l'eau, des dérivés de mono- et bis-benzoxazoles, de pyrènes, de bis-éthylène-aryles, d'aryl-triazoles, de naphtoxazoles, de benzofurannes, de naphtofurannes, de coumarines, de naphtalimides et de pyrazolines ou des mélanges de ces composés.

7. Composition selon l'une quelconque des revendications 1 à 6, caractérisée en ce que le polyester contient des maillons caténaires répondant à la formule générale III:

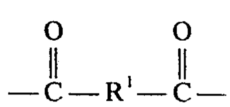

(III)

et/ou à la formule générale X:

$$—O—R^4—O— \qquad (X)$$

et/ou à la formule générale XIII a:

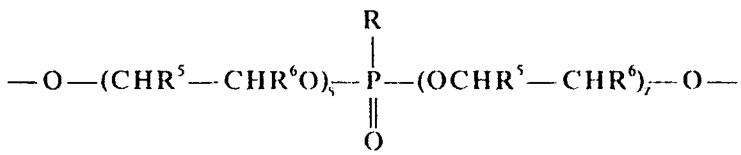

(XIII a)

et/ou à la formule générale XIV a:

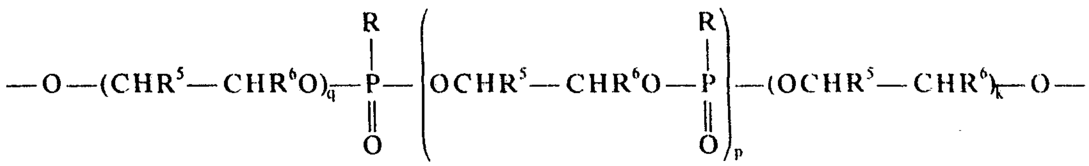

(XIV a)

8. Composition selon l'une quelconque des revendications 1 à 7, caractérisée en ce que le symbole $R^1$ représente un radical:

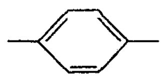 ou 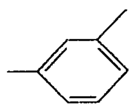

9. Composition selon l'une quelconque des revendications 1 à 8, caractérisée en ce que $R^4$ représente un radical:

$$—CH_2CH_2—(OCH_2CH_2)_r—$$

dans lequel r désigne un nombre de 1 à 230, de préférence le nombre 1 ou un nombre de 40 à 53.

10. Composition selon l'une quelconque des revendications 1 à 9, caractérisée en ce que le polyester contient des maillons caténaires répondant à la formule générale

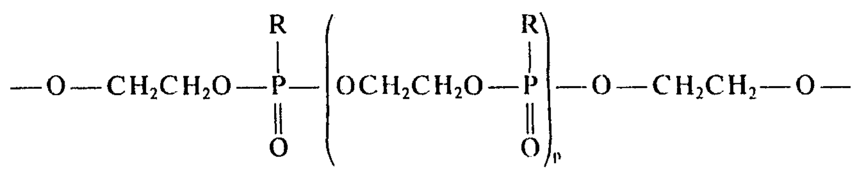

dans laquelle R représente un radical alkyle contenant de 1 à 4 atomes de carbone, de préférence le radical n-propyle, et p est égal à 1 ou à 2.

11. Composition selon l'une quelconque des revendications 1 à 9, caractérisée en ce que le polyester contient les maillons caténaires suivants:

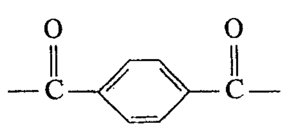 et/ou 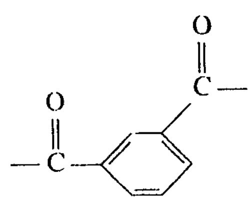

$$—OCH_2CH_2—O—CH_2CH_2O—$$

et/ou

$$—OCH_2CH_2—(OCH_2CH_2)_r—O—$$

et

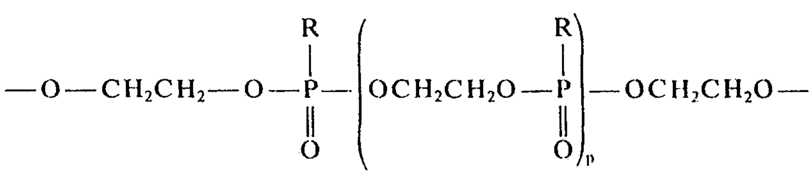

où r désigne un nombre de 40 à 53 et p le nombre 1 ou le nombre 2.

12. Procédé de préparation d'une composition selon l'une quelconque des revendications 1 à 11, procédé caractérisé en ce qu'on soumet un azureur optique, un polyester à radicaux d'esters phosphoniques qui est soluble ou dispersable dans l'eau, de l'eau et éventuellement d'autres additifs à une opération de broyage par voie humide, jusqu'à ce que 90% de l'ensemble des particules de l'azureur optique aient une dimension au plus égale à 2 $\mu$m.

13. Procédé selon la revendication 12, caractérisé en ce qu'on n'utilise d'abord, pour l'opération de broyage par voie humide, que 3 à 15% en poids de la quantité totale du polyester contenant des radicaux d'esters phosphoniques et on ajoute, en mélangeant, le reste du polyester aprés la fin de l'opération de broyage par voie humide, éventuellement avec des adjuvants supplémentaires et de l'eau.

14. Procédé pour l'azurage optique de matières en fibres synthétiques ou en mélanges de fibres synthétiques et de fibres naturelles, procédé caractérisé en ce qu'on imprégne la matière avec un bain contenant une composition selon l'une quelconque des revendications 1 à 11, puis on l'essore, éventuellement on la soumet à un séchage intermédiaire et ensuite on la thermosole.